# EUROPEAN PATENT APPLICATION

(11) **EP 4 847 189 A1**
(43) Date of publication of application: **02.12.2026**
(21) Application number: 25745160.9
(22) Date of filing: 22.01.2025
(51) Int. Cl.: B23K 35/14, B22F 3/00, B22F 3/18, B23K 35/22, B23K 35/26, B23K 35/30, C22C 13/00, C22C 19/03, C22C 38/00

(54) **JOINING MATERIAL AND METHOD FOR MANUFACTURING SAME, AND SOLDER JOINT AND METHOD FOR MANUFACTURING SAME**

(30) Priority: 23.01.2024 JP 2024008258
(71) Applicant: Senju Metal Industry Co., Ltd., Tokyo 120-8555 (JP)
(72) Inventor: SASAKI, Tomoki, Tokyo 120-8555 (JP); KIKUCHI, Shinji, Tokyo 120-8555 (JP); TACHIBANA, Yoshie, Tokyo 120-8555 (JP); MIO, Ayumi, Tokyo 120-8555 (JP)
(74) Representative: Lavoix
(86) International application number: PCT/JP2025/001885
(87) International publication number: WO 2025/159119

(57) **Abstract**

Provided are a joining material and a method for manufacturing the same, and a solder joint and a method for manufacturing the same, which can suppress the generation of voids in a solder joint portion. A joining material 1A including a base metal layer 2A and a coating layer 3A that covers at least one surface (Sa1 or Sa2) of the base metal layer 2A is adopted. The base metal layer 2A contains a first metal containing Sn and a second metal composed of an alloy containing Ni and Fe, and the coating layer contains a metal having a lower melting point than the second metal. A ratio of a thickness of the base metal layer to a thickness of the coating layer is 2 or more as a ratio represented by base metal layer/coating layer.

## Description

### TECHNICAL FIELD

The present invention relates to a joining material and a method for manufacturing the same, and a solder joint and a method for manufacturing the same. Priority is claimed on Japanese Patent Application No. 2024-008258, filed January 23, 2024, the content of which is incorporated herein by reference.

### BACKGROUND ART

In recent years, with an increase in temperature of an operating environment of a power semiconductor element using silicon carbide (SiC) or the like, a portion of a solder joint may reach about 250°C to 280°C. Therefore, a high-temperature solder that does not melt during operation under such high-temperature conditions is required.

In the production of such a high-temperature solder joint, a preform solder is used as a soldering material. The preform solder is a molded product obtained by processing solder into various shapes such as a square shape, a ribbon shape, and a disk shape.

As such a preform solder, for example, a preform solder obtained by pressure-molding a mixed powder of metal powder of Sn and metal powder composed of an alloy of Ni and Fe has been proposed (see Patent Document 1).

### Citation List

### Patent Document

Patent Document 1: Japanese Patent No. 7014991

### SUMMARY OF INVENTION

### Technical Problem

As described in Patent Document 1, the preform solder can suppress voids compared to a TLP paste. However, in a case where the preform solder as described in Patent Document 1 is used, there is a portion where the metal powder composed of the alloy of Ni and Fe is exposed on a joint surface of the preform solder that comes into contact with an object to be joined. Since the alloy of Ni and Fe has a high melting point and has almost no wettability, it has been newly found that there is a problem in that voids are likely to be generated in a solder joint portion.

The present invention has been made in view of the above circumstances, and an object of the present invention is to provide a joining material and a method for manufacturing the same, and a solder joint and a method for manufacturing the solder joint, which can suppress the generation of voids in a solder joint portion.

### Solution to Problem

The present invention includes the following aspects.
[1] A joining material including: a base metal layer; and a coating layer that covers at least one surface of the base metal layer, in which the base metal layer contains a first metal containing Sn and a second metal composed of an alloy containing Ni and Fe, the coating layer contains a metal having a lower melting point than the second metal, and a ratio of a thickness of the base metal layer to a thickness of the coating layer is 2 or more as a ratio represented by base metal layer/coating layer.
[2] The joining material according to [1], in which the ratio of the thickness of the base metal layer to the thickness of the coating layer is 2 to 300 as the ratio represented by base metal layer/coating layer.
[3] The joining material according to [1] or [2], in which the thickness of the coating layer is 1 to 150 µm.
[4] The joining material according to any one of [1] to [3], in which both surfaces of the base metal layer are each covered with the coating layer.
[5] The joining material according to any one of [1] to [4], in which a content of the second metal in the base metal layer is 1 mass% or more and 70 mass% or less with respect to a total mass of the first metal and the second metal, a content of the metal having a lower melting point than the second metal in the coating layer is 10 mass% or more and 100 mass% or less with respect to a total mass of the coating layer, and a content of the second metal in the coating layer is less than 15 mass% with respect to the total mass of the coating layer.
[6] The joining material according to any one of [1] to [5], in which the base metal layer further contains a third metal of which an entire surface is formed of a metal containing Ni.
[7] The joining material according to [6], in which a content of Ni in the metal containing Ni that forms the entire surface of the third metal is 50 mass% or more and 100 mass% or less with respect to a total mass of the metal forming the entire surface of the third metal, and a content of the third metal is 1 mass% to 70 mass% with respect to a total mass of the first metal, the second metal, and the third metal.
[8] A joining material including: a base metal layer; and a coating layer that covers at least one surface of the base metal layer, in which the base metal layer has a metal structure including a first phase that is a continuous phase and a second phase that is dispersed in the first phase, the first phase is constituted by a metal containing Sn, the second phase is constituted by an alloy containing Ni and Fe, the coating layer has a metal structure including a metal phase constituted by a metal having a lower melting point than the alloy containing Ni and Fe, and a ratio of a thickness of the base metal layer to a thickness of the coating layer is 2 or more as a ratio represented by base metal layer/coating layer.
[9] The joining material according to [8], in which the joining material is a clad material in which at least one surface of the base metal layer and the coating layer are pressure-bonded to each other.
[10] A solder joint formed using the joining material according to any one of [1] to [9].
[11] A method for manufacturing a joining material including a base metal layer, and a coating layer that covers at least one surface of the base metal layer, the method including: a step of pressure-bonding a coating sheet to at least one surface of a base metal sheet to cover the surface with the coating layer, in which the base metal sheet contains a first metal containing Sn and a second metal composed of an alloy containing Ni and Fe, the coating sheet contains a metal having a lower melting point than the second metal, and a ratio of a thickness of the base metal layer to a thickness of the coating layer is 2 or more as a ratio represented by base metal layer/coating layer.
[12] The method for manufacturing a joining material according to [11], in which the base metal layer further contains a third metal of which an entire surface is formed of a metal containing Ni.
[13] A method for manufacturing a solder joint, including: forming a joined portion between objects using the joining material manufactured by the method for manufacturing a joining material according to [11] or [12].

### Advantageous Effects of Invention

According to the present invention, it is possible to provide a joining material and a method for manufacturing the same, and a solder joint and a method for manufacturing the same, which can suppress the generation of voids in a solder joint portion.

### BRIEF DESCRIPTION OF DRAWINGS

[FIG. 1A] A perspective view of a joining material 1A according to a first embodiment.
[FIG. 1B] A schematic view showing a cross section in a thickness direction of the joining material 1A according to the first embodiment.
[FIG. 2A] An SEM image showing a cross section in a thickness direction of a joining material 1B according to a second embodiment.
[FIG. 2B] A schematic view showing a cross section in a thickness direction of a joining material 1D obtained by a pressure bonding step A in one embodiment of a method for manufacturing a joining material.
[FIG. 2C] A schematic view showing a step of a pressure bonding step B1 in one embodiment of the method for manufacturing a joining material.
[FIG. 2D] A schematic view showing a step of a pressure bonding step B2 in one embodiment of the method for manufacturing a joining material.
[FIG. 2E] A schematic view showing a step of a pressure bonding step B3 in one embodiment of the method for manufacturing a joining material.
[FIG. 3] A schematic view showing a cross section of a third metal 30A in a joining material according to a third embodiment.
[FIG. 4] An SEM image showing a cross section in a thickness direction of a joining material 1C according to a fourth embodiment.
[FIG. 5] A schematic view showing a cross section of a third metal 30B in a joining material according to a fifth embodiment.

### DESCRIPTION OF EMBODIMENTS

In the present specification, "include" and "contain" are concepts that each encompass "comprise," "consist essentially of," and "consist of".

In the present specification, a "first metal", a "second metal", a "third metal", and a "fourth metal" may respectively mean "particles formed of the first metal", "particles formed of the second metal", "particles formed of the third metal", and "particles formed of the fourth metal".

In the present specification, a "first metal powder", a "second metal powder", a "third metal powder", and a "fourth metal powder" may respectively mean "a particle group formed of the first metal", "a particle group formed of the second metal", "a particle group formed of the third metal", and "a particle group formed of the fourth metal".

### (Joining Material: First Embodiment)

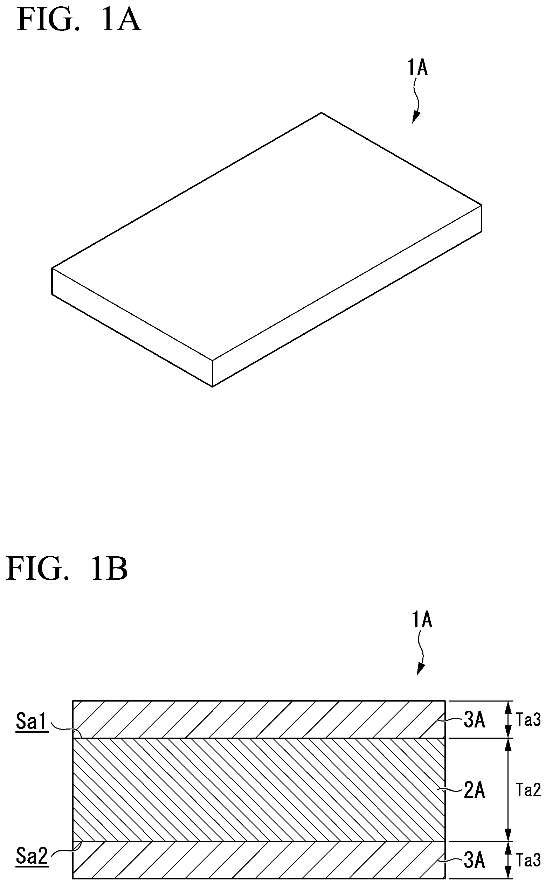

As illustrated in FIG. 1A, a joining material 1A according to a first embodiment has a square shape.

FIG. 1B is a schematic view showing a cross section of the joining material 1A according to the first embodiment. As illustrated in FIG. 1B, the joining material 1A has a base metal layer 2A and a coating layer 3A that covers both surfaces (that is, Sa1 and Sa2) of the base metal layer 2A.

In FIG. 1B, Ta2 indicates a thickness of the base metal layer 2A, and Ta3 means a thickness of the coating layer 3A.

The base metal layer contains a first metal containing Sn and a second metal composed of an alloy containing Ni and Fe.

The coating layer contains a metal having a lower melting point than the second metal.

A composition of the base metal layer is different from a composition of the coating layer.

### [Base Metal Layer]

The base metal layer contains the first metal containing Sn and the second metal composed of an alloy containing Ni and Fe.

### <First Metal>

The first metal contains Sn.

Since Sn has excellent ductility, the first metal containing Sn can eliminate voids between the first metals through plastic deformation. In addition, the first metal containing Sn can ensure general performance such as wettability as a soldering material.

The first metal may contain a metal other than Sn.

Examples of the metal other than Sn that may be contained in the first metal include Ag, Cu, In, Bi, Ni, Ge, P, Co, Ga, Zn, Sb, Pb, Au, Al, Pt, Pd, Fe, Mn, Zr, and As. These metals other than Sn may include one kind or two or more kinds. A metal group other than Sn can be optionally selected from these metals.

The metals that may be contained in the first metal may each be elemental Sn or an elemental metal other than Sn, or may be an alloy of Sn and an elemental metal other than Sn.

The first metal may be, for example, elemental Sn, a mixture of a metal other than Sn and Sn, an alloy of a metal other than Sn and Sn, or a mixture of an alloy containing Sn and another metal.

The first metal may contain unavoidable impurities in addition to the above-described metals. The effects of the present invention are not affected even in a case where unavoidable impurities are contained. The first metal may be one kind or two or more kinds.

A melting point of the first metal is preferably 300°C or lower, may be 250°C or lower, or may be 116°C to 200°C.

In a case where the melting point of the first metal is equal to or lower than the upper limit of the above-described preferred range, the wettability of the solder is easily secured.

A "melting point of a metal to be measured or a melting point of a metal powder to be measured" in the present specification refers to a melting point measured by differential scanning calorimetry (DSC). The melting point of the metal to be measured means a temperature at which the amount of heat absorbed per unit time is highest, based on the result of the DSC measurement for the metal to be measured. In a case where the metal to be measured has one peak in the measurement by DSC, the melting point of the metal to be measured means the temperature at the top of the peak. In a case where the metal to be measured has a plurality of peaks in the measurement by DSC, the melting point of the metal to be measured means a temperature of a peak top having the highest amount of heat absorbed per unit time among the plurality of peak tops.

The same applies to the melting point of the metal powder to be measured.

Melting points of the first metal and the fourth metal can be measured using, for example, DSC7020 manufactured by Hitachi High-Tech Science Corporation. Melting points of the second metal and the third metal, which will be described later, can be measured using, for example, DSC 404-F3 Pegasus manufactured by NETZSCH.

A content of Sn in the first metal is preferably 20 mass% or more and 100 mass% or less with respect to a total mass of the first metal. In order for the characteristics of Sn to be sufficiently exhibited, the content of Sn in the first metal is preferably 90 mass% or more, more preferably 95 mass% or more, and still more preferably 100 mass% with respect to the total mass of the first metal.

### <Second Metal>

The second metal is composed of an alloy containing Ni and Fe.

It is preferable that the alloy in the second metal contains Ni and Fe, has a higher melting point than the first metal, and is dispersed in the base metal layer.

A melting point of the alloy in the second metal is preferably higher than 300°C, more preferably 500°C or higher, and still more preferably 600°C to 1,600°C.

When the melting point of the alloy in the second metal is higher than the lower limit of the above-described preferred range, shear strength of a solder joint is easily increased even in a high-temperature operating environment.

The alloy in the second metal may contain a metal other than Ni and Fe. That is, the second metal may be an alloy of Ni and Fe, or an alloy of Ni, Fe, and a metal other than Ni and Fe, and is particularly preferably an alloy of Ni and Fe.

Examples of the metal other than Ni and Fe, which may be contained in the second metal, include Sn, Ag, Cu, In, Bi, Ge, P, Co, Ga, Zn, Sb, Pb, Au, Al, Pt, Pd, Mn, Zr, and As. These metals other than Ni and Fe may include one kind or two or more kinds. A metal group other than Ni and Fe can be optionally selected from these metals.

The second metal may contain unavoidable impurities in addition to the above-described metals. The effects of the present invention are not affected even in a case where unavoidable impurities are contained. The second metal may be one kind or two or more kinds.

A content of Ni in the second metal is preferably 80 mass% or more and 99 mass% or less, and more preferably 85 mass% or more and 95 mass% or less with respect to a total mass of the second metal.

A content of Fe in the second metal is preferably 1 mass% or more and 20 mass% or less, and more preferably 5 mass% or more and 15 mass% or less with respect to the total mass of the second metal.

When the contents of Ni and Fe in the second metal are in the above-described preferred ranges, an intermetallic compound is formed at an earlier stage, and the generation of voids can be suppressed.

A "particle size of a metal or a metal powder" mentioned in the present specification refers to an average particle size measured on a volume basis using a laser diffraction/scattering type particle size distribution analyzer.

The average particle size can be measured, for example, using a laser diffraction/scattering type particle size distribution analyzer (MT3300EXII) manufactured by MicrotracBEL Corp.

A particle size of the second metal is preferably 0.1 to 1,000 µm, more preferably 1 to 100 µm, and still more preferably 5 to 50 µm.

When the particle size of the second metal is equal to or greater than the lower limit of the above-described preferred range, wettability is easily secured, and when the particle size of the second metal is equal to or less than the upper limit of the above-described preferred range, an intermetallic compound is more easily formed.

### <Relationship between Contents of First Metal and Second Metal>

In the base metal layer of the joining material according to the first embodiment, a content of the first metal is preferably 30 mass%, 60 mass%, 80 mass%, 90 mass%, or 97 mass% with respect to a total mass (100 mass%) of the first metal and the second metal, and upper and lower limits thereof can be appropriately selected from these values.

The content of the first metal may be 30 to 99 mass% or 30 to 97 mass% with respect to the total mass (100 mass%) of the first metal and the second metal.

In the base metal layer of the joining material according to the first embodiment, a content of the second metal is preferably 3 mass%, 10 mass%, 20 mass%, 40 mass%, or 70 mass% with respect to the total mass (100 mass%) of the first metal and the second metal, and upper and lower limits thereof can be appropriately selected from these values.

The content of the second metal may be 1 to 70 mass% or 3 to 70 mass% with respect to the total mass (100 mass%) of the first metal and the second metal.

When the content of the second metal is within the above-described preferred range, heat resistance of a solder joint portion is further improved.

In the base metal layer of the joining material according to the first embodiment, a sum of the content of the first metal and the content of the second metal does not exceed 100 mass%.

In the base metal layer of the joining material according to the first embodiment, a ratio of the content of the first metal to the content of the second metal is preferably 0.43 or 32 as a mass ratio represented by content of first metal/ content of second metal, and upper and lower limits thereof can be appropriately selected from these values. The mass ratio represented by content of first metal/content of second metal may be 0.1 or more and 100 or less, or 0.4 or more and 35 or less.

When the mass ratio represented by content of first metal/content of second metal is within the above-described preferred range, voids in the solder joint portion are more easily suppressed, and the heat resistance of the solder joint portion is further improved.

In the base metal layer of the joining material according to the first embodiment, the total content of the first metal and the second metal is preferably 60 mass% or more and 100 mass% or less, more preferably 80 mass% or more and 100 mass% or less, and still more preferably 90 mass% or more and 100 mass% or less, and may be 100 mass% with respect to a total mass of the base metal layer.

The thickness of the base metal layer is preferably 150 µm, 250 µm, 290 µm, 298 µm, 299 µm, or 1,500 µm, and upper and lower limits thereof can be appropriately selected from these values.

The thickness of the base metal layer may be, for example, 5 to 5,000 µm, 150 to 1,500 µm, or 150 to 290 µm.

When the thickness of the base metal layer is equal to or more than the above-described lower limit, the heat resistance of the solder joint portion portion is more easily enhanced. When the thickness of the base metal layer is equal to or less than the above-described upper limit, the generation of voids in the solder joint portion that comes into contact with an object to be joined is more easily suppressed.

The thickness of the base metal layer may be, for example, 1 to 5,000 µm, 3 to 5,000 µm, 5 to 5,000 µm, 10 to 5,000 µm, 15 to 5,000 µm, 20 to 5,000 µm, 25 to 5,000 µm, 30 to 5,000 µm, 40 to 5,000 µm, 50 to 5,000 µm, 75 to 5,000 µm, 100 to 5,000 µm, 125 to 5,000 µm, 150 to 5,000 µm, 175 to 5,000 µm, 200 to 5,000 µm, 250 to 5,000 µm, 290 to 5,000 µm, 300 to 5,000 µm, 350 to 5,000 µm, 400 to 5,000 µm, 500 to 5,000 µm, 750 to 5,000 µm, 1,000 to 5,000 µm, 1,200 to 5,000 µm, 1,500 to 5,000 µm, 1 to 4,000 µm, 1 to 3,500 µm, 1 to 3,000 µm, 1 to 2,500 µm, 1 to 2,000 µm, 1 to 1,500 µm, 1 to 1,200 µm, 1 to 1,000 µm, 1 to 750 µm, 1 to 500 µm, 1 to 400 µm, 1 to 350 µm, 1 to 300 µm, 1 to 290 µm, 1 to 250 µm, 1 to 200 µm, 1 to 175 µm, 1 to 150 µm, 1 to 125 µm, 1 to 100 µm, 1 to 75 µm, 1 to 50 µm, 1 to 40 µm, 1 to 30 µm, 1 to 25 µm, 1 to 20 µm, or 1 to 15 µm.

When the thickness of the base metal layer is equal to or more than the above-described lower limit, the heat resistance of the solder joint portion is more easily enhanced. When the thickness of the base metal layer is equal to or less than the above-described upper limit, the generation of voids in the solder joint portion that comes in contact with the object to be joined is more easily suppressed.

### [Coating Layer]

The coating layer contains a metal having a lower melting point than the alloy containing Ni and Fe and forming the second metal. The metal forming the coating layer forms a compound with a metal constituting the object to be joined.

The melting point of the metal having a lower melting point than the second metal is preferably 300°C or lower, and may be 250°C or lower or 78°C to 200°C.

Examples of the metal having a lower melting point than the second metal include a metal containing Sn and a metal containing In. The coating layer may contain a metal other than Sn and In. The metal that may be contained in the coating layer may be an elemental metal other than Sn and In, or may be an alloy of Sn, In, and an elemental metal other than Sn and In.

The coating layer may be elemental Sn, a mixture of a metal other than Sn and Sn, an alloy of a metal other than Sn and Sn, or a mixture of an alloy containing Sn and a metal other than Sn.

In addition, the coating layer may be elemental In, a mixture of a metal other than In and In, an alloy of a metal other than In and In, or a mixture of an alloy containing In and a metal other than In.

In a case where the coating layer contains Sn, examples of the metal that may be contained other than Sn include Ag, Cu, In, Bi, Ni, Ge, P, Co, Ga, Zn, Sb, Pb, Au, Al, Pt, Pd, Fe, Mn, Zr, and As. The metal other than Sn may include one kind or two or more kinds. A metal group other than Sn can be optionally selected from these metals. In addition, in a case where the coating layer contains In, examples of the metal that may be contained other than In include Sn, Ag, Cu, Bi, Ni, Ge, P, Co, Ga, Zn, Sb, Pb, Au, Al, Pt, Pd, Fe, Mn, Zr, and As. The metal other than In may include one kind or two or more kinds. A metal group other than In can be optionally selected from these metals.

The coating layer may contain unavoidable impurities in addition to the above-described metals. The effects of the present invention are not affected even in a case where unavoidable impurities are contained.

In a case where the coating layer contains Sn, a content of Sn in the coating layer is preferably 10 mass% or more and 100 mass% or less with respect to a total mass of the coating layer. In order for the characteristics of Sn to be sufficiently exhibited, the content of Sn in the solder is preferably 40 mass% or more, more preferably 60 mass% or more, particularly preferably 80 mass% or more, and most preferably 90 mass% or more, and may be 95 mass% or more or 100 mass%.

In addition, in a case where the coating layer contains In, a content of In in the coating layer is preferably 10 mass% or more and 100 mass% or less with respect to the total mass of the coating layer. In order for the characteristics of In to be sufficiently exhibited, the content of In in the solder is preferably 20 mass% or more, more preferably 40 mass% or more, particularly preferably 60 mass% or more, and most preferably 80 mass% or more, and may be 100 mass%.

The coating layer may or may not contain the second metal described above in [Base Metal Layer], and it is preferable that the coating layer does not contain the second metal.

In a case where the coating layer contains the second metal, a content of the second metal in the coating layer is preferably less than 15 mass%, more preferably 10 mass% or less, still more preferably 1 mass% or less, and particularly preferably 0.1 mass% or less with respect to the total mass of the coating layer.

The thickness of the coating layer is preferably 1 µm, 3 µm, 5 µm, 10 µm, 25 µm, 30 µm, 50 µm, 75 µm, 100 µm, or 150 µm, and upper and lower limits thereof can be appropriately selected from these values. The thickness of the coating layer may be, for example, 1 to 150 µm, 3 to 100 µm, 1 to 75 µm, or 5 to 75 µm.

When the thickness of the coating layer is equal to or more than the above-described lower limit, the generation of voids in the solder joint portion that comes in contact with the object to be joined is more easily suppressed. When the thickness of the coating layer is equal to or less than the above-described upper limit, the heat resistance of the solder joint portion is more easily enhanced.

The thickness of the coating layer may be, for example, 1 to 150 µm, 3 to 150 µm, 5 to 150 µm, 7.5 to 150 µm, 10 to 150 µm, 12.5 to 150 µm, 15 to 150 µm, 20 to 150 µm, 25 to 150 µm, 30 to 150 µm, 40 to 150 µm, 50 to 150 µm, 75 to 150 µm, 1 to 125 µm, 1 to 100 µm, 1 to 75 µm, 1 to 50 µm, 1 to 40 µm, 1 to 30 µm, 1 to 25 µm, 1 to 20 µm, 1 to 15 µm, 1 to 12.5 µm, 1 to 10 µm, 1 to 7.5 µm, 1 to 5 µm, or 1 to 3 µm.

When the thickness of the coating layer is equal to or more than the above-described lower limit, the generation of voids in the solder joint portion that comes in contact with the object to be joined is more easily suppressed. When the thickness of the coating layer is equal to or less than the above-described upper limit, the heat resistance of the solder joint portion is more easily enhanced.

In the present specification, the "thickness of the coating layer" means the thickness of the coating layer that covers one surface of the base metal layer. That is, even in a case where both surfaces of the base metal layer are covered with the coating layer, the "thickness of the coating layer" means the thickness of the coating layer that covers one surface of the base metal layer, out of the two coating layers.

The number of layers of the coating layer covering one surface of the base metal layer may be one or two.

In a case where the number of layers of the coating layer covering one surface of the base metal layer is two or more, the thickness of the coating layer covering one surface means a sum of thicknesses of all the coating layers covering one surface.

In a case where both surfaces of the base metal layer are covered with the coating layer, the number of layers of the coating layer and the composition of the coating layer on one surface may be different from the number of layers of the coating layer and the composition of the coating layer on the other surface.

A thickness of the joining material is preferably 300 µm or 1,510 µm, and upper and lower limits thereof can be appropriately selected from these values. The thickness of the joining material may be, for example, 10 to 5,300 µm or 20 to 1,510 µm.

The thickness of the joining material may be, for example, 2 to 5,300 µm, 2 to 4,000 µm, 2 to 3,000 µm, 2 to 2,000 µm, 2 to 1,750 µm, 2 to 1,510 µm, 2 to 1,200 µm, 2 to 1,000 µm, 2 to 750 µm, 2 to 500 µm, 2 to 400 µm, 2 to 300 µm, 2 to 250 µm, 2 to 200 µm, 2 to 150 µm, 2 to 100 µm, 2 to 75 µm, 2 to 50 µm, 2 to 40 µm, 2 to 30 µm, 5 to 5,300 µm, 10 to 5,300 µm, 15 to 5,300 µm, 20 to 5,300 µm, 30 to 5,300 µm, 40 to 5,300 µm, 50 to 5,300 µm, 75 to 5,300 µm, 100 to 5,300 µm, 150 to 5,300 µm, 200 to 5,300 µm, 250 to 5,300 µm, 300 to 5,300 µm, 400 to 5,300 µm, 500 to 5,300 µm, 750 to 5,300 µm, 1,000 to 5,300 µm, or 1,200 to 5,300 µm.

In the present specification, a ratio of the thickness of the base metal layer to the thickness of the coating layer means a ratio represented by base metal layer (µm)/coating layer (µm).

The ratio of the thickness of the base metal layer to the thickness of the coating layer is preferably 2, 10, 58, 298, 299, or 300 as a ratio represented by base metal layer/coating layer, and upper and lower limits thereof can be appropriately selected from these values. The ratio represented by base metal layer/coating layer may be, for example, 1 to 500, 2 to 300, 2 to 100, or 2 to 58.

When the ratio represented by base metal layer/coating layer is within the above-described range, the heat resistance of the solder joint portion is more easily enhanced, and the generation of voids in the solder joint portion that comes in contact with the object to be joined is more easily suppressed.

The ratio of the thickness of the base metal layer to the thickness of the coating layer may be, for example, 2 to 500, 3 to 500, 5 to 500, 7.5 to 500, 10 to 500, 15 to 500, 20 to 500, 30 to 500, 50 to 500, 100 to 500, 200 to 500, 2 to 400, 2 to 350, 2 to 300, 2 to 250, 2 to 200, 2 to 150, 2 to 100, 2 to 75, 2 to 60, 2 to 58, 2 to 50, 2 to 30, 2 to 20, 2 to 15, 2 to 10, 2 to 7.5, 2 to 5, or 2 to 3 as a ratio represented by base metal layer/coating layer.

When the ratio represented by base metal layer/coating layer is within the above-described range, the heat resistance of the solder joint portion is more easily enhanced, and the generation of voids in the solder joint portion that comes in contact with the object to be joined is more easily suppressed. When the ratio is equal to or more than the lower limit of the above-described range, the heat resistance of the solder joint portion is more easily enhanced. When the ratio is equal to or less than the upper limit of the above-described range, the generation of voids in the solder joint portion is more easily suppressed.

With respect to the joining material according to the first embodiment, the above-described provisions regarding the thicknesses of the base metal layer and the coating layer, the ratio of the thickness of the base metal layer to the thickness of the coating layer, the contents of the first metal and the second metal, and the like may be optionally combined.

Hereinafter, the ratio of the thickness of the base metal layer to the thickness of the coating layer means a ratio represented by base metal layer (µm)/coating layer (µm).

In the joining material according to the first embodiment, it is preferable that the thickness of the coating layer is 1 to 150 µm and the ratio of the thickness of the base metal layer to the thickness of the coating layer is 2 to 300, it is more preferable that the thickness of the coating layer is 5 to 150 µm and the ratio of the thickness of the base metal layer to the thickness of the coating layer is 2 to 200, it is still more preferable that the thickness of the coating layer is 5 to 150 µm and the ratio of the thickness of the base metal layer to the thickness of the coating layer is 2 to 100, and it is particularly preferable that the thickness of the coating layer is 5 to 75 µm and the ratio of the thickness of the base metal layer to the thickness of the coating layer is 2 to 60.

When the thickness of the coating layer is within the above-described range and the ratio of the thickness of the base metal layer to the thickness of the coating layer is within the above-described range, the heat resistance of the solder joint portion is more easily enhanced, and the generation of voids in the solder joint portion is more easily suppressed.

In the joining material according to the first embodiment, it is preferable that the thickness of the base metal layer is 150 to 1,500 µm, the thickness of the coating layer is 1 to 150 µm, the ratio of the thickness of the base metal layer to the thickness of the coating layer is 2 to 500 as a ratio represented by base metal layer/coating layer, the content of the first metal is 30 to 97 mass% with respect to the total mass (100 mass%) of the first metal and the second metal, the content of the second metal is 3 to 70 mass% with respect to the total mass (100 mass%) of the first metal and the second metal, and the ratio of the content of the first metal to the content of the second metal is 0.4 or more and 35 or less as a mass ratio represented by content of first metal/content of second metal.

**In** the joining material according to the first embodiment, it is preferable that the thickness of the base metal layer is 150 to 290 µm, the thickness of the coating layer is 5 to 100 µm, the ratio of the thickness of the base metal layer to the thickness of the coating layer is 2 to 58 as a ratio represented by base metal layer/coating layer, the content of the first metal is 30 to 97 mass% with respect to the total mass (100 mass%) of the first metal and the second metal, the content of the second metal is 3 to 70 mass% with respect to the total mass (100 mass%) of the first metal and the second metal, and the ratio of the content of the first metal to the content of the second metal is 0.4 or more and 35 or less as a mass ratio represented by content of first metal/content of second metal.

In the joining material according to the first embodiment, it is preferable that the thickness of the base metal layer is 1 to 5,000 µm, the thickness of the coating layer is 1 to 150 µm, the ratio of the thickness of the base metal layer to the thickness of the coating layer is 2 to 500 as a ratio represented by base metal layer/coating layer, the content of the first metal is 30 to 97 mass% with respect to the total mass (100 mass%) of the first metal and the second metal, the content of the second metal is 3 to 70 mass% with respect to the total mass (100 mass%) of the first metal and the second metal, and the ratio of the content of the first metal to the content of the second metal is 0.4 or more and 35 or less as a mass ratio represented by content of first metal/content of second metal.

In the joining material according to the first embodiment, it is preferable that the thickness of the base metal layer is 1 to 2,000 µm, the thickness of the coating layer is 1 to 100 µm, the ratio of the thickness of the base metal layer to the thickness of the coating layer is 2 to 500 as a ratio represented by base metal layer/coating layer, the content of the first metal is 30 to 97 mass% with respect to the total mass (100 mass%) of the first metal and the second metal, the content of the second metal is 3 to 70 mass% with respect to the total mass (100 mass%) of the first metal and the second metal, and the ratio of the content of the first metal to the content of the second metal is 0.4 or more and 35 or less as a mass ratio represented by content of first metal/content of second metal.

A known manufacturing method can be used for manufacturing the joining material according to the first embodiment, and for example, a hot-dip plating method or a rolling method can be applied.

### ■Description of Effects■

The joining material according to the first embodiment described above includes the base metal layer and the coating layer that covers at least one surface of the base metal layer. Since the joining material has the coating layer, the generation of voids in the solder joint portion can be suppressed. The reason why such effects can be obtained is as follows.

On the surface of the base metal layer containing the metal powder composed of the alloy of Ni and Fe, there is a portion where the metal powder composed of the alloy of Ni and Fe is exposed. Since the alloy of Ni and Fe has a high melting point and has very poor wettability, voids are likely to be generated in the solder joint.

Since the coating layer covers the base metal layer such that the alloy of Ni and Fe is not exposed on the surface of the base metal layer, the generation of voids in the joint portion can be suppressed when an object to be joined is joined using the joining material according to the first embodiment.

### (Joining Material: Second Embodiment)

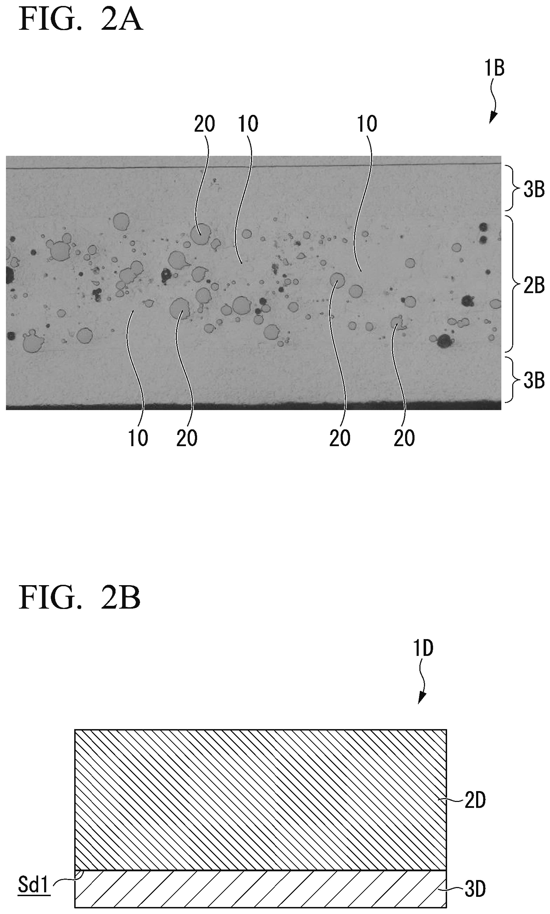

FIG. 2A is an SEM image showing a cross section in a thickness direction of an example of a joining material according to a second embodiment. In FIG. 2A, a joining material 1B includes a base metal layer 2B and a coating layer 3B that covers each of both surfaces of the base metal layer 2B.

The base metal layer 2B shown in FIG. 2A has a metal structure including a first phase 10 that is a continuous phase and a second phase 20 that is dispersed in the first phase.

The coating layer 3B shown in FIG. 2A has a metal structure including a metal phase constituted by a metal having a lower melting point than the alloy containing Ni and Fe.

A composition of the base metal layer 2B is different from a composition of the coating layer 3B.

The joining material 1B illustrated in FIG. 2A is a joining material of Example C1 described later in Examples. In the joining material 1B, a thickness of the base metal layer is 150 µm, and a thickness of the coating layer is 75 µm. In the base metal layer 2B, a content of the first phase is 80 mass% with respect to a total mass of the base metal layer, and a content of the second phase is 20 mass% with respect to the total mass of the base metal layer. A content of Ni in the second phase is 90 mass% with respect to the total mass of the second phase, and a content of Fe in the second phase is 10 mass% with respect to the total mass of the second phase.

The joining material 1B shown in FIG. 2A is a clad material in which the coating layer is bonded to both surfaces of the base metal layer.

In the clad material, an intermetallic compound may be formed at a portion where the base metal layer and the coating layer are in contact with each other. As will be described later, the joining material according to the second embodiment can be produced, for example, by pressure-bonding a base metal sheet that is a material of the base metal layer and a coating sheet that is a material of the coating layer.

As will be described later, the base metal sheet can be manufactured, for example, by a method such as roll forming using, as a raw material, a metal powder containing the first metal containing Sn and the second metal composed of the alloy containing Ni and Fe.

The base metal sheet can also be referred to as a preform solder.

### [Base Metal Layer]

In the base metal layer 2B, the first phase 10 is a continuous phase and is constituted by a metal containing Sn. The description of the metal containing Sn and a content thereof is the same as in <First Metal> in the above-described embodiment.

Furthermore, in the first phase 10, grain boundaries may be present between metal crystals containing Sn.

An overall melting point of the metal constituting the first phase can be measured in the same manner as the melting point of the first metal. In a case where the first phase contains a plurality of kinds of metals, as the overall melting point of the metal constituting the first phase, a temperature of a peak top having the highest amount of heat absorbed per unit time is adopted among a plurality of peak tops that the plurality of kinds of metals constituting the first phase can have.

An overall melting point of a metal constituting the second phase is also defined in the same manner.

An overall melting point of a metal forming an entire surface of a third phase is also defined in the same manner.

In a case where an entirety of the third phase has a uniform composition, an overall melting point of a metal constituting the third phase is also defined in the same manner.

In a case where the third phase has a structure composed of a core portion and a surface layer covering the core portion, an overall melting point of a metal forming the surface layer of the third phase is also defined in the same manner, and an overall melting point of a metal forming the core portion of the third phase is also defined in the same manner.

The description of the overall melting point of the metal constituting the first phase is the same as the description of the melting point of the first metal.

In the base metal layer 2B, the second phase 20 is dispersed in the first phase 10.

The second phase 20 is constituted by an alloy containing Ni and Fe. The description of the alloy containing Ni and Fe, a particle size thereof, a content thereof, and the like is the same as in <Second Metal> in the first embodiment.

The description of an overall melting point of the alloy constituting the second phase is the same as the description of the melting point of the second metal.

In the present specification, a particle size of a phase can be measured and calculated from a cross-sectional structure including the phase using an optical microscope, a SEM, a transmission electron microscope (TEM), or the like. The particle size of the phase can be obtained by measuring three or more diameters of the phase and calculating an average value thereof.

A particle size of the second phase can be set to a particle size of a second metal powder prepared for forming the second phase.

In the present specification, a "content of a metal constituting a phase" means a "content of an entirety of the metal constituting the phase".

In the base metal layer, from the viewpoint of achieving both bondability and shear strength, a mixing ratio of the metal containing Sn constituting the first phase and the alloy containing Ni and Fe constituting the second phase is preferably such that the content of the alloy constituting the first phase is 30 mass%, 60 mass%, 80 mass%, 90 mass%, or 97 mass% with respect to a total mass (100 mass%) of the metal containing Sn constituting the first phase and the alloy containing Ni and Fe constituting the second phase, and upper and lower limits thereof can be appropriately selected from these values.

A content of the second metal may be 30 to 99 mass% or 30 to 97 mass%.

In the base metal layer, the content of the alloy constituting the second phase is preferably 3 mass%, 10 mass%, 20 mass%, 40 mass%, or 70 mass% with respect to the total mass (100 mass%) of the metal containing Sn constituting the first phase and the alloy containing Ni and Fe constituting the second phase, and upper and lower limits thereof can be appropriately selected from these values.

The content of the alloy constituting the second phase may be 1 to 70 mass% or 3 to 70 mass%, with respect to the total mass (100 mass%) of the metal containing Sn constituting the first phase and the alloy containing Ni and Fe constituting the second phase.

When the content of the alloy constituting the second phase is within the above-described preferred range, the heat resistance of the solder joint portion is further improved.

In the base metal layer of the joining material according to the second embodiment, a sum of the content of the metal containing Sn constituting the first phase and the content of the alloy constituting the second phase does not exceed 100 mass%.

In the base metal layer of the joining material according to the second embodiment, a ratio of the content of the metal containing Sn constituting the first phase to the content of the alloy containing Ni and Fe constituting the second phase is preferably 0.43 or 32 as a mass ratio represented by first phase/second phase, and upper and lower limits thereof can be appropriately selected from these values. The mass ratio represented by first phase/second phase is preferably 0.1 or more and 100 or less, and more preferably 0.4 or more and 35 or less.

When the mass ratio represented by first phase/second phase is within the above-described preferred range, voids in the solder joint portion are more easily suppressed, and the heat resistance of the solder joint portion is further improved.

In the base metal layer of the joining material according to the second embodiment, the total content of the metal containing Sn constituting the first phase and the alloy containing Ni and Fe constituting the second phase is preferably 60 mass% or more and 100 mass% or less, more preferably 80 mass% or more and 100 mass% or less, and still more preferably 90 mass% or more and 100 mass% or less, and may be 100 mass%, with respect to the total mass of the base metal layer.

In the joining material according to the second embodiment, the description of thicknesses of the base metal layer and the coating layer is the same as in the first embodiment.

The thickness of the base metal layer of the joining material according to the second embodiment is preferably 150 µm, 250 µm, 290 µm, 298 µm, 299 µm, or 1,500 µm, and upper and lower limits thereof can be appropriately selected from these values.

The thickness of the base metal layer may be, for example, 5 to 5,000 µm, 150 to 1,500 µm, or 150 to 290 µm.

When the thickness of the base metal layer is equal to or more than the above-described lower limit, the heat resistance of the solder joint portion is more easily enhanced. When the thickness of the base metal layer is equal to or less than the above-described upper limit, the generation of voids in the solder joint portion that comes in contact with the object to be joined is more easily suppressed.

The thickness of the base metal layer of the joining material according to the second embodiment may be, for example, 1 to 5,000 µm, 3 to 5,000 µm, 5 to 5,000 µm, 10 to 5,000 µm, 15 to 5,000 µm, 20 to 5,000 µm, 25 to 5,000 µm, 30 to 5,000 µm, 40 to 5,000 µm, 50 to 5,000 µm, 75 to 5,000 µm, 100 to 5,000 µm, 125 to 5,000 µm, 150 to 5,000 µm, 175 to 5,000 µm, 200 to 5,000 µm, 250 to 5,000 µm, 290 to 5,000 µm, 300 to 5,000 µm, 350 to 5,000 µm, 400 to 5,000 µm, 500 to 5,000 µm, 750 to 5,000 µm, 1,000 to 5,000 µm, 1,200 to 5,000 µm, 1,500 to 5,000 µm, 1 to 4,000 µm, 1 to 3,500 µm, 1 to 3,000 µm, 1 to 2,500 µm, 1 to 2,000 µm, 1 to 1,500 µm, 1 to 1,200 µm, 1 to 1,000 µm, 1 to 750 µm, 1 to 500 µm, 1 to 400 µm, 1 to 350 µm, 1 to 300 µm, 1 to 290 µm, 1 to 250 µm, 1 to 200 µm, 1 to 175 µm, 1 to 150 µm, 1 to 125 µm, 1 to 100 µm, 1 to 75 µm, 1 to 50 µm, 1 to 40 µm, 1 to 30 µm, 1 to 25 µm, 1 to 20 µm or 1 to 15 µm.

When the thickness of the base metal layer is equal to or more than the above-described lower limit, the heat resistance of the solder joint portion is more easily enhanced. When the thickness of the base metal layer is equal to or less than the above-described upper limit, the generation of voids in the solder joint portion that comes in contact with the object to be joined is more easily suppressed.

### [Coating Layer]

The coating layer 3B has a metal structure including a metal phase constituted by a metal having a lower melting point than the alloy containing Ni and Fe. The description of the metal having a lower melting point than the alloy containing Ni and Fe, a content thereof, and the like is the same as that of the metal having a lower melting point than the alloy containing Ni and Fe in the first embodiment.

The metal forming the coating layer in the joining material according to the second embodiment and a content thereof are the same as the metal forming the coating layer in the joining material according to the first embodiment and the content thereof.

In the joining material according to the second embodiment, the description of the number of layers of the coating layer and the thickness of the coating layer is the same as in the first embodiment.

The coating layer may or may not have the second phase described above in [Base Metal Layer], and it is preferable that the coating layer does not have the second phase.

In a case where the coating layer has the second phase, a content of the alloy containing Ni and Fe constituting the second phase in the coating layer is preferably less than 15 mass%, more preferably 10 mass% or less, still more preferably 1 mass% or less, and particularly preferably 0.1 mass% or less with respect to a total mass of the coating layer.

The thickness of the coating layer is preferably 1 µm, 3 µm, 5 µm, 10 µm, 25 µm, 30 µm, 50 µm, 75 µm, 100 µm, or 150 µm, and upper and lower limits thereof can be appropriately selected from these values. For example, the thickness may be 1 to 150 µm, 3 to 100 µm, 1 to 75 µm, or 5 to 75 µm. When the thickness of the coating layer is equal to or more than the above-described lower limit, the generation of voids in the solder joint portion that comes in contact with the object to be joined is more easily suppressed. When the thickness of the coating layer is equal to or less than the above-described upper limit, the heat resistance of the solder joint portion is more easily enhanced.

The thickness of the coating layer of the joining material according to the second embodiment may be, for example, 1 to 150 µm, 3 to 150 µm, 5 to 150 µm, 7.5 to 150 µm, 10 to 150 µm, 12.5 to 150 µm, 15 to 150 µm, 20 to 150 µm, 25 to 150 µm, 30 to 150 µm, 40 to 150 µm, 50 to 150 µm, 75 to 150 µm, 1 to 125 µm, 1 to 100 µm, 1 to 75 µm, 1 to 50 µm, 1 to 40 µm, 1 to 30 µm, 1 to 25 µm, 1 to 20 µm, 1 to 15 µm, 1 to 12.5 µm, 1 to 10 µm, 1 to 7.5 µm, 1 to 5 µm, or 1 to 3 µm.

When the thickness of the coating layer is equal to or more than the above-described lower limit, the generation of voids in the solder joint portion that comes in contact with the object to be joined is more easily suppressed. When the thickness of the coating layer is equal to or less than the above-described upper limit, the heat resistance of the solder joint portion is more easily enhanced.

A thickness of the joining material is preferably 300 µm or 1,510 µm, and upper and lower limits thereof can be appropriately selected from these values. The thickness of the joining material may be, for example, 10 to 5,300 µm or 20 to 1,510 µm.

The thickness of the joining material according to the second embodiment may be, for example, 2 to 5,300 µm, 2 to 4,000 µm, 2 to 3,000 µm, 2 to 2,000 µm, 2 to 1,750 µm, 2 to 1,510 µm, 2 to 1,200 µm, 2 to 1,000 µm, 2 to 750 µm, 2 to 500 µm, 2 to 400 µm, 2 to 300 µm, 2 to 250 µm, 2 to 200 µm, 2 to 150 µm, 2 to 100 µm, 2 to 75 µm, 2 to 50 µm, 2 to 40 µm, 2 to 30 µm, 5 to 5,300 µm, 10 to 5,300 µm, 15 to 5,300 µm, 20 to 5,300 µm, 30 to 5,300 µm, 40 to 5,300 µm, 50 to 5,300 µm, 75 to 5,300 µm, 100 to 5,300 µm, 150 to 5,300 µm, 200 to 5,300 µm, 250 to 5,300 µm, 300 to 5,300 µm, 400 to 5,300 µm, 500 to 5,300 µm, 750 to 5,300 µm, 1,000 to 5,300 µm, or 1,200 to 5,300 µm.

A ratio of the thickness of the base metal layer to the thickness of the coating layer is preferably 2, 10, 58, 298, 299, or 300 as a ratio represented by base metal layer/coating layer, and upper and lower limits thereof can be appropriately selected from these values. The ratio represented by base metal layer/coating layer may be, for example, 1 to 500, 2 to 300, 2 to 100, or 2 to 58.

When the ratio represented by base metal layer/coating layer is within the above-described range, the heat resistance of the solder joint portion is more easily enhanced, and the generation of voids in the solder joint portion that comes in contact with the object to be joined is more easily suppressed.

In the joining material according to the second embodiment, the ratio of the thickness of the base metal layer to the thickness of the coating layer may be, for example, 2 to 500, 3 to 500, 5 to 500, 7.5 to 500, 10 to 500, 15 to 500, 20 to 500, 30 to 500, 50 to 500, 100 to 500, 200 to 500, 300 to 500, 2 to 400, 2 to 350, 2 to 300, 2 to 250, 2 to 200, 2 to 150, 2 to 100, 2 to 75, 2 to 60, 2 to 58, 2 to 50, 2 to 30, 2 to 20, 2 to 15, 2 to 10, 2 to 7.5, 2 to 5, or 2 to 3 as a ratio represented by base metal layer/coating layer.

When the ratio represented by base metal layer/coating layer is within the above-described range, the heat resistance of the solder joint portion is more easily enhanced, and the generation of voids in the solder joint portion that comes in contact with the object to be joined is more easily suppressed. When the ratio is equal to or more than the lower limit of the above-described range, the heat resistance of the solder joint portion is more easily enhanced. When the ratio is equal to or less than the upper limit of the above-described range, the generation of voids in the solder joint portion is more easily suppressed.

With respect to the joining material according to the second embodiment, the above-described provisions regarding the thicknesses of the base metal layer and the coating layer, the ratio of the thickness of the base metal layer to the thickness of the coating layer, the contents of the metal containing Sn constituting the first phase and the alloy containing Ni and Fe constituting the second phase, and the like defined above may be optionally combined.

Hereinafter, the ratio of the thickness of the base metal layer to the thickness of the coating layer means a ratio represented by base metal layer (µm)/coating layer (µm).

In the joining material according to the second embodiment, it is preferable that the thickness of the coating layer is 1 to 150 µm and the ratio of the thickness of the base metal layer to the thickness of the coating layer is 2 to 300, it is more preferable that the thickness of the coating layer is 5 to 150 µm and the ratio of the thickness of the base metal layer to the thickness of the coating layer is 2 to 200, it is still more preferable that the thickness of the coating layer is 5 to 150 µm and the ratio of the thickness of the base metal layer to the thickness of the coating layer is 2 to 100, and it is particularly preferable that the thickness of the coating layer is 5 to 75 µm and the ratio of the thickness of the base metal layer to the thickness of the coating layer is 2 to 60.

When the thickness of the coating layer is within the above-described range and the ratio of the thickness of the base metal layer to the thickness of the coating layer is within the above-described range, the heat resistance of the solder joint portion is more easily enhanced, and the generation of voids in the solder joint portion is more easily suppressed.

In the joining material according to the second embodiment, it is preferable that the thickness of the base metal layer is 150 to 1,500 µm, the thickness of the coating layer is 1 to 150 µm, the ratio of the thickness of the base metal layer to the thickness of the coating layer is 2 to 500 as a ratio represented by base metal layer/coating layer, the content of the metal containing Sn constituting the first phase is 30 to 97 mass% with respect to the total mass (100 mass%) of the metal containing Sn constituting the first phase and the alloy containing Ni and Fe constituting the second phase, the content of the alloy containing Ni and Fe constituting the second phase is 3 to 70 mass% with respect to the total mass (100 mass%) of the metal containing Sn constituting the first phase and the alloy containing Ni and Fe constituting the second phase, and the ratio of the content of the metal containing Sn constituting the first phase to the content of the alloy containing Ni and Fe constituting the second phase is 0.4 or more and 35 or less as a mass ratio represented by content of first metal/content of second metal.

In the joining material according to the second embodiment, it is more preferable that the thickness of the base metal layer is 150 to 290 µm, the thickness of the coating layer is 5 to 100 µm, the ratio of the thickness of the base metal layer to the thickness of the coating layer is 2 to 58 as a ratio represented by base metal layer/coating layer, the content of the metal containing Sn constituting the first phase is 30 to 97 mass% with respect to the total mass (100 mass%) of the metal containing Sn constituting the first phase and the alloy containing Ni and Fe constituting the second phase, the content of the alloy containing Ni and Fe constituting the second phase is 3 to 70 mass% with respect to the total mass (100 mass%) of the metal containing Sn constituting the first phase and the alloy containing Ni and Fe constituting the second phase, and the ratio of the content of the first metal to the content of the second metal is 0.4 or more and 35 or less as a mass ratio represented by content of first metal/content of second metal.

In the joining material according to the second embodiment, it is preferable that the thickness of the base metal layer is 1 to 5,000 µm, the thickness of the coating layer is 1 to 150 µm, the ratio of the thickness of the base metal layer to the thickness of the coating layer is 2 to 500 as a ratio represented by base metal layer/coating layer, the content of the metal containing Sn constituting the first phase is 30 to 97 mass% with respect to the total mass (100 mass%) of the metal containing Sn constituting the first phase and the alloy containing Ni and Fe constituting the second phase, the content of the alloy containing Ni and Fe constituting the second phase is 3 to 70 mass% with respect to the total mass (100 mass%) of the metal containing Sn constituting the first phase and the alloy containing Ni and Fe constituting the second phase, and the ratio of the content of the metal containing Sn constituting the first phase to the content of the alloy containing Ni and Fe constituting the second phase is 0.4 or more and 35 or less as a mass ratio represented by content of first metal/content of second metal.

In the joining material according to the second embodiment, it is preferable that the thickness of the base metal layer is 1 to 2,000 µm, the thickness of the coating layer is 1 to 100 µm, the ratio of the thickness of the base metal layer to the thickness of the coating layer is 2 to 500 as a ratio represented by base metal layer/coating layer, the content of the metal containing Sn constituting the first phase is 30 to 97 mass% with respect to the total mass (100 mass%) of the metal containing Sn constituting the first phase and the alloy containing Ni and Fe constituting the second phase, the content of the alloy containing Ni and Fe constituting the second phase is 3 to 70 mass% with respect to the total mass (100 mass%) of the metal containing Sn constituting the first phase and the alloy containing Ni and Fe constituting the second phase, and the ratio of the content of the metal containing Sn constituting the first phase to the content of the alloy containing Ni and Fe constituting the second phase is 0.4 or more and 35 or less as a mass ratio represented by content of first metal/content of second metal.

### (Method for Manufacturing Joining Material)

In one embodiment, the joining material according to the second embodiment can be manufactured, for example, by the following manufacturing method.

A method for manufacturing the joining material according to the present embodiment is a method for manufacturing a joining material having a base metal layer and a coating layer that covers at least both surfaces of the base metal layer.

The method for manufacturing the joining material according to the present embodiment includes a pressure bonding step A and any of pressure bonding steps B1 to B3.

### <Pressure Bonding Step A>

In the pressure bonding step A, the coating sheet is pressure-bonded to one surface of the base metal sheet to cover the surface with the coating layer.

As illustrated in FIG. 2B, a joining material 1D having a base metal layer 2D and a coating layer 3D that covers one surface Sd1 of the base metal layer 2D is obtained by the pressure bonding step A.

The base metal sheet contains a first metal containing Sn and a second metal composed of an alloy containing Ni and Fe.

The coating sheet contains a metal having a lower melting point than the second metal. A method for manufacturing the coating sheet may be a known method, and for example, the coating sheet may be produced by a method in which a metal forming the coating sheet having a predetermined composition is prepared, and the metal is processed into a plate shape, rolled to a predetermined thickness, and cut to a predetermined size.

In the present embodiment, the description of the metal contained in the base metal sheet, a particle size thereof, a content thereof, and the like is the same as that of the base metal layer of the joining material.

In the present embodiment, the description of the metal contained in the coating sheet, a content thereof, and the like is the same as that of the coating layer of the joining material.

As a pressure bonding method, a known rolling method can be used, and for example, the pressure bonding may be performed using a twin-roll type rolling mill or the like. The number of rolling passes and a rolling load applied to the base metal sheet and the coating sheet may be appropriately set according to a desired shape and thickness of an intended joining material.

The rolling load is not particularly limited, and may be, for example, 0.1 to 20 kN. The number of rolling passes is not particularly limited, and may be 1 to 10.

A surface temperature of the rolling roll is not particularly limited, and may be, for example, 50°C to 150°C.

In the joining material obtained through the pressure bonding step A, an intermetallic compound may be formed at an interface between the base metal layer and the coating layer.

The method for manufacturing the joining material according to the present embodiment may include any of the pressure bonding steps B1 to B3 after the pressure bonding step A.

### <Pressure Bonding Step B1>

In the pressure bonding step B1, two joining materials obtained in the pressure bonding step A, each having a base metal layer and a coating layer that covers one surface of the base metal layer, are prepared. Hereinafter, the two joining materials are referred to as a first joining material and a second joining material, respectively.

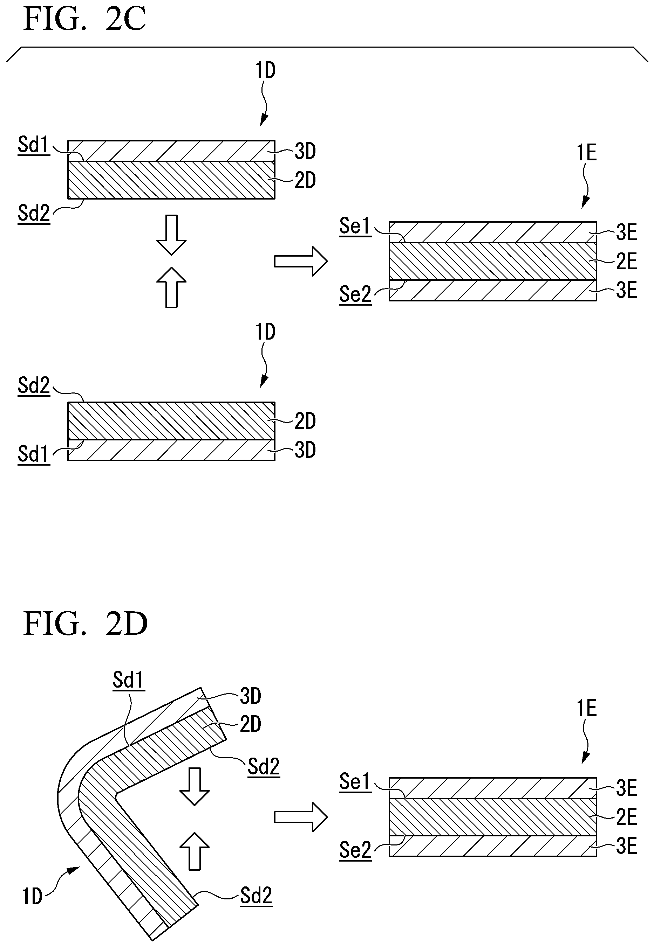

As illustrated in FIG. 2C, in the pressure bonding step B1, one surface Sd2 of a base metal layer 2D of a first joining material 1D and one surface Sd2 of a base metal layer 2D of a second joining material 1D are pressure-bonded to each other.

A joining material 1E having a base metal layer 2E and a coating layer 3E that covers both surfaces (that is, Se1 and Se2) of the base metal layer 2E is obtained by the pressure bonding step B1.

A pressure bonding method in the pressure bonding step B1 may be the same method as the pressure bonding method in the pressure bonding step A.

### <Pressure Bonding Step B2>

In the pressure bonding step B2, one joining material obtained in the pressure bonding step A, having a base metal layer and a coating layer that covers one surface of the base metal layer, is prepared.

As illustrated in FIG. 2D, in the pressure bonding step B2, the joining material 1D is bent, and the surfaces Sd2 of the base metal layer 2D of the joining material 1D are pressure-bonded to each other.

A joining material 1E having a base metal layer 2E and a coating layer 3E that covers both surfaces (that is, Se1 and Se2) of the base metal layer 2E is obtained by the pressure bonding step B2.

A pressure bonding method in the pressure bonding step B2 may be the same method as the pressure bonding method in the pressure bonding step A.

### <Pressure Bonding Step B3>

In the pressure bonding step B3, one joining material obtained in the pressure bonding step A, having a base metal layer and a coating layer that covers one surface of the base metal layer, is prepared.

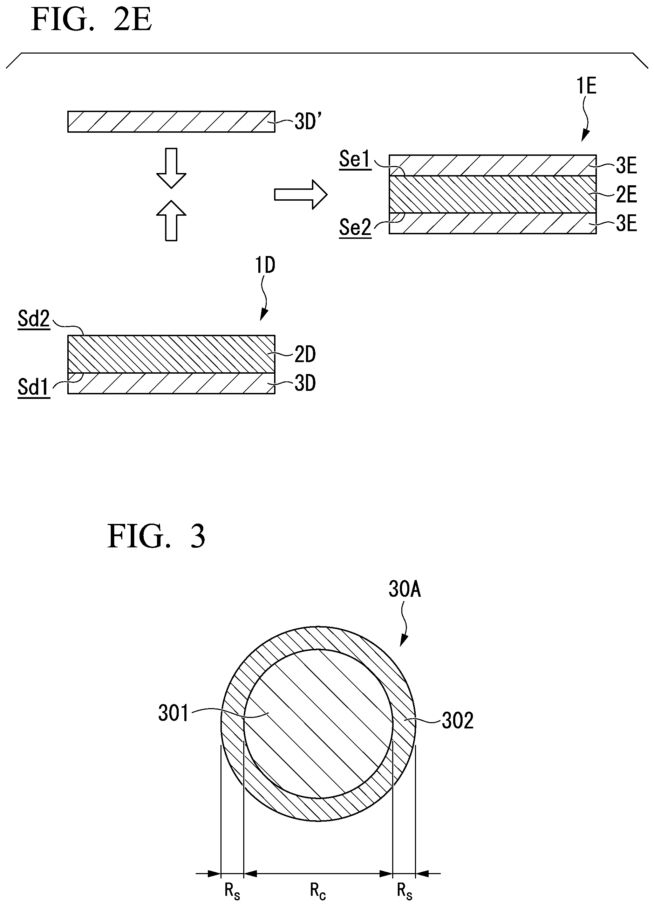

As illustrated in FIG. 2E, in the pressure bonding step B3, a coating sheet 3D' is pressure-bonded to one surface Sd2 of the base metal layer 2D of the joining material 1D.

A joining material 1E having a base metal layer 2E and a coating layer 3E that covers both surfaces (that is, Se1 and Se2) of the base metal layer 2E is obtained by the pressure bonding step B3.

A pressure bonding method in the pressure bonding step B3 may be the same method as the pressure bonding method in the pressure bonding step A.

A method for manufacturing a base metal sheet is not particularly limited, and the base metal sheet may be manufactured, for example, by a "powder compaction step".

### <Powder Compaction Step>

In the powder compaction step, a metal powder mixture containing a first metal powder containing Sn and a second metal powder consisting of an alloy containing Ni and Fe is subjected to powder compaction to produce a base metal sheet which is a preform solder.

The first metal powder and the second metal powder are the same as <First metal> and <Second metal> described above, respectively.

A known rolling method can be used as a method of subjecting the metal powder mixture to powder compaction, and for example, the metal powder mixture may be processed using a twin-roll type rolling mill or the like. The number of rolling passes and a rolling load applied to the metal powder mixture may be appropriately set according to a desired shape and thickness of an intended base metal sheet.

The rolling load is not particularly limited, and may be, for example, 15 to 40 kN.

In a case where a rolling mill is used, a surface temperature of the rolling roll is not particularly limited, and may be, for example, 50°C to 150°C.

The joining material according to the second embodiment described above can suppress the generation of voids in the solder joint portion, similarly to the joining material according to the first embodiment.

### (Joining Material: Third Embodiment)

In a joining material according to a third embodiment, a base metal layer further contains a third metal of which an entire surface is formed of a metal containing Ni.

The joining material according to the third embodiment is the same as the joining material according to the first embodiment, except that the base metal layer contains the third metal.

### <Third Metal>

The entire surface of the third metal is formed of a metal containing Ni. That is, in the third metal, Ni is exposed on the surface.

A content of Ni in the metal forming the entire surface of the third metal is 50 mass% or more and 100 mass% or less with respect to a total mass of the metal forming the entire surface of the third metal.

A melting point of the metal forming the entire surface of the third metal is higher than 300°C, preferably 500°C or higher, and more preferably 600°C to 1,600°C.

It is preferable that the third metal is dispersed in the base metal layer.

The metal forming the entire surface of the third metal may consist of Ni or may contain a metal other than Ni.

Examples of the metal forming the entire surface of the third metal include elemental Ni, an alloy of a metal other than Ni and Ni, and a mixture of an alloy containing Ni and another metal, and elemental Ni is preferable.

Examples of the metal other than Ni in the alloy of the metal other than Ni and Ni include Ag, Cu, In, Bi, Ge, P, Co, Ga, Zn, Sb, Pb, Au, Al, Pt, Pd, Fe, Mn, Zr, Sn, and As. These metals other than Ni may include one kind or two or more kinds. A metal group other than Ni can be optionally selected from these metals.

The metal forming the entire surface of the third metal may include unavoidable impurities in addition to the above-described metals. The effects of the present invention are not affected even in a case where unavoidable impurities are contained.

The metal forming the entire surface of the third metal may be one kind, or may be two or more kinds laminated.

In a case where the metal forming the entire surface of the third metal is a metal containing Ni and a metal other than Ni, a content of Ni in the metal forming the entire surface is 50 mass% or more, preferably 70 mass% or more, more preferably 90 mass% or more, even more preferably 95 mass% or more, and particularly preferably 98 mass% or more with respect to the total mass of the metal forming the entire surface.

In a case where the metal forming the entire surface of the third metal contains Fe, a content of Fe in the metal forming the entire surface of the third metal is preferably 0 mass% or more and less than 5 mass% with respect to the total mass of the metal forming the entire surface of the third metal.

In the joining material according to the third embodiment, a particle size of the third metal is preferably 0.1 to 1,000 µm, more preferably 1 to 300 µm, and still more preferably 10 to 100 µm.

When the particle size of the third metal is equal to or greater than the lower limit of the above-described preferred range, thermal conductive properties of the solder joint portion are easily enhanced.

A specific structure of the third metal will be described below with examples.

As described in (1) below, an entirety of the third metal may have a uniform composition.

Alternatively, as described in (2) below, the third metal may have a structure having a plurality of different compositions.

In a case where the entirety of the third metal has a uniform composition, as described in (1-1) below, the third metal may be a metal consisting of Ni, or as described in (1-2) below, the third metal may be a metal containing Ni and a metal other than Ni.

Alternatively, in a case where the third metal has a structure having a plurality of different compositions, the third metal may have a core portion and a surface layer as described in (2) below.

Hereinafter, these cases will be described.

### (1) Case where entirety of third metal has uniform composition

### (1-1) Case Where Third Metal Consists of Ni

The composition of the third metal is different from compositions of the first metal and the second metal.

In this case, the content of Ni in the metal forming the entire surface of the third metal is 100 mass% with respect to the total mass of the metal forming the entire surface of the third metal. A ratio of Ni in the surface of the third metal is 100% with respect to an area (100%) of the entire surface of the third metal.

The third metal may contain unavoidable impurities in addition to Ni. The effects of the present invention are not affected even in a case where unavoidable impurities are contained.

### (1-2) Case where third metal contains Ni and metal other than Ni

The composition of the third metal is different from the compositions of the first metal and the second metal.

The third metal may be a mixture of a metal other than Ni and Ni, may be an alloy of a metal other than Ni and Ni, or may be a mixture of an alloy containing Ni and another metal.

Examples of the metal other than Ni that may be contained in the third metal, include Ag, Cu, In, Bi, Ge, P, Co, Ga, Zn, Sb, Pb, Au, Al, Pt, Pd, Fe, Mn, Zr, Sn, and As. These metals other than Ni may include one kind or two or more kinds. A metal group other than Ni can be optionally selected from these metals.

The third metal may contain unavoidable impurities in addition to the above-described metals. The effects of the present invention are not affected even in a case where unavoidable impurities are contained.

The third metal in (1-2) may be one kind or two or more kinds.

In a case where the third metal is a metal containing Ni and a metal other than Ni, a content of Ni in the third metal is 50 mass% or more and 100 mass% or less, preferably 70 mass% or more, more preferably 90 mass% or more, still more preferably 95 mass% or more, and particularly preferably 98 mass% or more with respect to a total mass of the third metal.

In a case where the third metal contains Fe, a content of Fe in the third metal is preferably 0 mass% or more and less than 5 mass% with respect to the total mass of the third metal.

### (2) Case where third metal has structure composed of core portion and surface layer covering core portion

As illustrated in FIG. 3, a third metal 30A has a core portion 301 and a surface layer 302 covering the core portion 301. Rc means a particle size of the core portion 301 (hereinafter, Rc may be referred to as a core diameter). Rs means a thickness of the surface layer 302.

A composition of the metal forming the surface layer is different from a composition of the metal forming the core portion. The composition of the third metal is different from the compositions of the first metal and the second metal.

The composition of the metal forming the surface layer of the third metal is different from the compositions of the first metal and the second metal.

### · Surface Layer

The metal forming the surface layer of the third metal may consist of Ni or may be a metal containing Ni and a metal other than Ni.

That is, the metal forming the surface layer of the third metal may be elemental Ni or may be an alloy of a metal other than Ni and Ni.

It is preferable that the metal forming the surface layer of the third metal is elemental Ni.

Examples of the metal other than Ni that may be contained in the metal forming the surface layer of the third metal include Ag, Cu, In, Bi, Ge, P, Co, Ga, Zn, Sb, Pb, Au, Al, Pt, Pd, Fe, Mn, Zr, Sn, and As. These metals other than Ni may include one kind or two or more kinds. A metal group other than Ni can be optionally selected from these metals.

The metal forming the surface layer of the third metal may contain unavoidable impurities in addition to the above-described metals. The effects of the present invention are not affected even in a case where unavoidable impurities are contained.

The metal forming the surface layer of the third metal may be one kind, or may be two or more kinds laminated.

In a case where the metal forming the surface layer of the third metal is a metal containing Ni and a metal other than Ni, a content of Ni in the metal forming the surface layer of the third metal is 50 mass% or more and less than 100 mass%, preferably 70 mass% or more, more preferably 80 mass% or more, even more preferably 90 mass% or more, particularly preferably 95 mass% or more, and most preferably 98 mass% or more, with respect to a total mass of the metal forming the surface layer of the third metal.

In a case where the metal forming the surface layer of the third metal contains Fe, a content of Fe in the metal forming the surface layer of the third metal is preferably 0 mass% or more and less than 5 mass% with respect to the total mass of the metal forming the surface layer of the third metal.

At least a part of a surface of the core portion is covered with the surface layer. The surface layer may cover a part of the core portion or may cover an entirety of the core portion, and it is preferable that the surface layer covers the entirety of the core portion. In FIG. 3, an entire surface of the core portion 301 is covered with the surface layer 302.

A ratio of an area of the surface of the core portion covered with the surface layer with respect to a total surface area (100%) of the core portion is preferably 50% or more and 100% or less, more preferably 70% or more and 100% or less, even more preferably 90% or more and 100% or less, particularly preferably 95% or more and 100% or less, and most preferably 100%.

The thickness Rs of the surface layer of the third metal may be, for example, 0.01 µm or more and 100 µm or less. The thickness of the surface layer of the third metal may be 0.1 µm or more, 0.3 µm or more, 0.5 µm or more, 0.75 µm or more, 1 µm or more, or 2 µm or more. The thickness of the surface layer of the third metal may be 50 µm or less, 30 µm or less, 10 µm or less, 5 µm or less, or 3 µm or less.

In the present specification, the thickness Rs of the surface layer of the third metal, the core diameter Rc of the core portion of the third metal, and a thickness Ri of an intermediate layer described later can be measured from a cross-sectional structure of the third metal, using an optical microscope, a SEM, a transmission electron microscope (TEM), or the like.

The thickness Rs of the surface layer of the third metal can be measured using an Auger electron spectroscopy apparatus.

Alternatively, the core diameter Rc of the core portion of the third metal can be measured as follows. In manufacturing the third metal powder, a particle size of a metal powder prepared for use as the core portion can be set as the core diameter Rc.

The surface layer of the third metal may be a plating layer formed by a plating treatment.

Examples of a method of the plating treatment include known electroplating and electroless plating.

A melting point of the metal forming the surface layer of the third metal is higher than 300°C, preferably 500°C or higher, and more preferably 600°C to 1,600°C.

### · Core Portion

The metal forming the core portion of the third metal may be a single elemental metal, a mixture of two or more kinds of elemental metals, an alloy formed of two or more kinds of metal elements, a mixture of alloys formed of two or more kinds of metal elements, or a mixture of an alloy formed of two or more kinds of metal elements and an elemental metal.

Examples of the metal that may be contained in the core portion of the third metal include Ag, Cu, In, Bi, Ni, Ge, P, Co, Ga, Zn, Sb, Pb, Au, Al, Pt, Pd, Fe, Mn, Zr, Sn, and As. These metals may include one kind or two or more kinds. A metal group which may be contained in the core portion can be optionally selected from these metals.

The core portion of the third metal may contain unavoidable impurities in addition to the above-described metals. The effects of the present invention are not affected even in a case where unavoidable impurities are contained.

The metal forming the core portion of the third metal may be one kind or two or more kinds.

The core diameter Rc of the core portion of the third metal is preferably 0.1 to 1,000 µm, more preferably 3 to 800 µm, still more preferably 5 to 500 µm, particularly preferably 8 to 300 µm, and most preferably 25 to 150 µm, in terms of particle size.

The third metal 30A may be one kind or two or more kinds.

### <Relationship between Contents of First Metal, Second Metal, and Third Metal>

In the base metal layer of the joining material according to the third embodiment, a content of the first metal is preferably 10 to 98 mass%, more preferably 30 to 90 mass%, and still more preferably 40 to 80 mass% with respect to a total mass of the first metal, the second metal, and the third metal.

In the base metal layer of the joining material according to the third embodiment, a content of the second metal is preferably 1 to 70 mass% and more preferably 3 to 30 mass% with respect to the total mass of the first metal, the second metal, and the third metal.

When the content of the second metal is within the above-described preferred range, the heat resistance of the solder joint portion is further improved.

In the base metal layer of the joining material according to the third embodiment, a content of the third metal is preferably 1 to 70 mass% and more preferably 5 to 50 mass% with respect to the total mass of the first metal, the second metal, and the third metal.

When the content of the third metal is within the above-described preferred range, thermal conductive properties of the solder joint portion are easily increased.

In the base metal layer of the joining material according to the third embodiment, a total content of the second metal and the third metal is preferably 1 to 90 mass%, more preferably 3 to 70 mass%, and still more preferably 20 to 60 mass% with respect to the total mass of the first metal, the second metal, and the third metal.

In the base metal layer of the joining material according to the third embodiment, a sum of the content of the first metal, the content of the second metal, and the content of the third metal does not exceed 100 mass%.

In the base metal layer of the joining material according to the third embodiment, the total content of the first metal, the second metal, and the third metal is preferably 60 to 100 mass%, more preferably 80 to 100 mass%, and still more preferably 90 to 100 mass%, and may be 100 mass% with respect to a total mass of the base metal layer.

In the base metal layer of the joining material according to the third embodiment, a ratio of the content of the first metal to the content of the second metal is preferably 0.1 or more and 100 or less, more preferably 1 or more and 50 or less, and still more preferably 4 or more and 30 or less as a mass ratio represented by content of first metal/content of second metal.

When the mass ratio is within the above-described preferred range, voids in the solder joint portion are more easily suppressed, and the heat resistance of the solder joint portion is further improved.

In the base metal layer of the joining material according to the third embodiment, a ratio of the content of the first metal to the content of the third metal is preferably 0.1 or more and 100 or less, more preferably 0.3 or more and 20 or less, and still more preferably 1 or more and 5 or less as a mass ratio represented by content of first metal/content of third metal.

When the mass ratio is within the above-described preferred range, voids in the solder joint portion are more easily suppressed, and the thermal conductive properties of the solder joint portion are more easily enhanced.

In the base metal layer of the joining material according to the third embodiment, a ratio of the content of the third metal to the content of the second metal is preferably 0.01 or more and 100 or less, more preferably 0.1 or more and 50 or less, and still more preferably 1 or more and 30 or less as a mass ratio represented by content of third metal/content of second metal.

When the mass ratio is within the above-described preferred range, the heat resistance of the solder joint portion is more easily improved, and the thermal conductive properties of the solder joint portion are more easily enhanced.

In the joining material according to the third embodiment, the description of the composition of the coating layer is the same as in the first embodiment.

In the joining material according to the third embodiment, the description of the thicknesses of the base metal layer and the coating layer is the same as in the first embodiment.

In the joining material according to the third embodiment, the thickness of the base metal layer is preferably 5 to 5,000 µm, more preferably 150 to 1,500 µm, and still more preferably 150 to 290 µm.

In the joining material according to the third embodiment, the thickness of the coating layer is preferably 1 to 150 µm, more preferably 3 to 100 µm, and still more preferably 5 to 75 µm.

In the joining material according to the third embodiment, a ratio of the thickness of the base metal layer to the thickness of the coating layer is preferably 1 to 500, more preferably 2 to 100, and still more preferably 2 to 58 as a ratio represented by base metal layer/coating layer, as a ratio represented by base metal layer/coating layer.

The thickness of the base metal layer of the joining material according to the third embodiment may be, for example, 1 to 5,000 µm, 3 to 5,000 µm, 5 to 5,000 µm, 10 to 5,000 µm, 15 to 5,000 µm, 20 to 5,000 µm, 25 to 5,000 µm, 30 to 5,000 µm, 40 to 5,000 µm, 50 to 5,000 µm, 75 to 5,000 µm, 100 to 5,000 µm, 125 to 5,000 µm, 150 to 5,000 µm, 175 to 5,000 µm, 200 to 5,000 µm, 250 to 5,000 µm, 290 to 5,000 µm, 300 to 5,000 µm, 350 to 5,000 µm, 400 to 5,000 µm, 500 to 5,000 µm, 750 to 5,000 µm, 1,000 to 5,000 µm, 1,200 to 5,000 µm, 1,500 to 5,000 µm, 1 to 4,000 µm, 1 to 3,500 µm, 1 to 3,000 µm, 1 to 2,500 µm, 1 to 2,000 µm, 1 to 1,500 µm, 1 to 1,200 µm, 1 to 1,000 µm, 1 to 750 µm, 1 to 500 µm, 1 to 400 µm, 1 to 350 µm, 1 to 300 µm, 1 to 290 µm, 1 to 250 µm, 1 to 200 µm, 1 to 175 µm, 1 to 150 µm, 1 to 125 µm, 1 to 100 µm, 1 to 75 µm, 1 to 50 µm, 1 to 40 µm, 1 to 30 µm, 1 to 25 µm, 1 to 20 µm, or 1 to 15 µm.

When the thickness of the base metal layer is equal to or more than the above-described lower limit, the heat resistance of the solder joint portion is more easily enhanced. When the thickness of the base metal layer is equal to or less than the above-described upper limit, the generation of voids in the solder joint portion that comes in contact with the object to be joined is more easily suppressed.

The thickness of the coating layer of the joining material according to the third embodiment may be, for example, 1 to 150 µm, 3 to 150 µm, 5 to 150 µm, 7.5 to 150 µm, 10 to 150 µm, 12.5 to 150 µm, 15 to 150 µm, 20 to 150 µm, 25 to 150 µm, 30 to 150 µm, 40 to 150 µm, 50 to 150 µm, 75 to 150 µm, 1 to 125 µm, 1 to 100 µm, 1 to 75 µm, 1 to 50 µm, 1 to 40 µm, 1 to 30 µm, 1 to 25 µm, 1 to 20 µm, 1 to 15 µm, 1 to 12.5 µm, 1 to 10 µm, 1 to 7.5 µm, 1 to 5 µm, or 1 to 3 µm.

When the thickness of the coating layer is equal to or more than the above-described lower limit, the generation of voids in the solder joint portion that comes in contact with the object to be joined is more easily suppressed. When the thickness of the coating layer is equal to or less than the above-described upper limit, the heat resistance of the solder joint portion is more easily enhanced.

The thickness of the joining material according to the third embodiment may be, for example, 2 to 5,300 µm, 2 to 4,000 µm, 2 to 3,000 µm, 2 to 2,000 µm, 2 to 1,750 µm, 2 to 1,510 µm, 2 to 1,200 µm, 2 to 1,000 µm, 2 to 750 µm, 2 to 500 µm, 2 to 400 µm, 2 to 300 µm, 2 to 250 µm, 2 to 200 µm, 2 to 150 µm, 2 to 100 µm, 2 to 75 µm, 2 to 50 µm, 2 to 40 µm, 2 to 30 µm, 5 to 5,300 µm, 10 to 5,300 µm, 15 to 5,300 µm, 20 to 5,300 µm, 30 to 5,300 µm, 40 to 5,300 µm, 50 to 5,300 µm, 75 to 5,300 µm, 100 to 5,300 µm, 150 to 5,300 µm, 200 to 5,300 µm, 250 to 5,300 µm, 300 to 5,300 µm, 400 to 5,300 µm, 500 to 5,300 µm, 750 to 5,300 µm, 1,000 to 5,300 µm, or 1,200 to 5,300 µm.

In the joining material according to the third embodiment, the ratio of the thickness of the base metal layer to the thickness of the coating layer may be, for example, 2 to 500, 3 to 500, 5 to 500, 7.5 to 500, 10 to 500, 15 to 500, 20 to 500, 30 to 500, 50 to 500, 100 to 500, 200 to 500, 2 to 400, 2 to 350, 2 to 300, 2 to 250, 2 to 200, 2 to 150, 2 to 100, 2 to 75, 2 to 60, 2 to 58, 2 to 50, 2 to 30, 2 to 20, 2 to 15, 2 to 10, 2 to 7.5, 2 to 5, or 2 to 3 as a ratio represented by base metal layer/coating layer.

When the ratio represented by base metal layer/coating layer is within the above-described range, the heat resistance of the solder joint portion is more easily enhanced, and furthermore, the generation of voids in the solder joint portion that comes in contact with the object to be joined is more easily suppressed. When the ratio is equal to or more than the lower limit of the above-described range, the heat resistance of the solder joint portion is more easily enhanced. When the ratio is equal to or less than the upper limit of the above-described range, the generation of voids in the solder joint portion is more easily suppressed.

With respect to the joining material according to the third embodiment, the above-described provisions regarding the thicknesses of the base metal layer and the coating layer, the ratio of the thickness of the base metal layer to the thickness of the coating layer, a structure of the third metal, the contents of the first metal, the second metal, and the third metal, and the like may be optionally combined.

Hereinafter, the ratio of the thickness of the base metal layer to the thickness of the coating layer means a ratio represented by base metal layer (µm)/coating layer (µm).

In the joining material according to the third embodiment, it is preferable that the thickness of the coating layer is 1 to 150 µm and the ratio of the thickness of the base metal layer to the thickness of the coating layer is 2 to 300, it is more preferable that the thickness of the coating layer is 5 to 150 µm and the ratio of the thickness of the base metal layer to the thickness of the coating layer is 2 to 200, it is still more preferable that the thickness of the coating layer is 5 to 150 µm and the ratio of the thickness of the base metal layer to the thickness of the coating layer is 2 to 100, and it is particularly preferable that the thickness of the coating layer is 5 to 75 µm and the ratio of the thickness of the base metal layer to the thickness of the coating layer is 2 to 60.

When the thickness of the coating layer is within the above-described range and the ratio of the thickness of the base metal layer to the thickness of the coating layer is within the above-described range, the heat resistance of the solder joint portion is more easily enhanced, and the generation of voids in the solder joint portion is more easily suppressed.

In the joining material according to the third embodiment, it is preferable that the thickness of the base metal layer is 150 to 290 µm, the thickness of the coating layer is 5 to 100 µm, the ratio of the thickness of the base metal layer to the thickness of the coating layer is 2 to 58 as a ratio represented by base metal layer/coating layer, the third metal consists of Ni, the content of the first metal is 30 to 90 mass% with respect to the total mass of the first metal, the second metal, and the third metal, the content of the second metal is 3 to 30 mass% with respect to the total mass of the first metal, the second metal, and the third metal, the content of the third metal is 5 to 50 mass% with respect to the total mass of the first metal, the second metal, and the third metal, the ratio of the content of the first metal to the content of the second metal is 4 or more and 30 or less as a mass ratio represented by content of first metal/content of second metal, the ratio of the content of the first metal to the content of the third metal is 1 or more and 5 or less as a mass ratio represented by content of first metal/content of third metal, and the ratio of the content of the third metal to the content of the second metal is 1 or more and 30 or less as a mass ratio represented by content of third metal/content of second metal.

Alternatively, in the joining material according to the third embodiment, it is preferable that the thickness of the base metal layer is 150 to 290 µm, the thickness of the coating layer is 5 to 100 µm, the ratio of the thickness of the base metal layer to the thickness of the coating layer is 2 to 58 as a ratio represented by base metal layer/coating layer, the third metal has a structure composed of the core portion and the surface layer that covers the core portion, the third metal has a structure composed of the core portion and the surface layer that covers the core portion, the metal forming the surface layer of the third metal consists of Ni, the content of the first metal is 30 to 90 mass% with respect to the total mass of the first metal, the second metal, and the third metal, the content of the second metal is 3 to 30 mass% with respect to the total mass of the first metal, the second metal, and the third metal, the content of the third metal is 5 to 50 mass% with respect to the total mass of the first metal, the second metal, and the third metal, the ratio of the content of the first metal to the content of the second metal is 4 or more and 30 or less as a mass ratio represented by content of first metal/content of second metal, the ratio of the content of the first metal to the content of the third metal is 1 or more and 5 or less as a mass ratio represented by content of first metal/content of third metal, and the ratio of the content of the third metal to the content of the second metal is 1 or more and 30 or less as a mass ratio represented by content of third metal/content of second metal.

In the joining material according to the third embodiment, it is preferable that the thickness of the base metal layer is 1 to 5,000 µm, the thickness of the coating layer is 1 to 150 µm, the ratio of the thickness of the base metal layer to the thickness of the coating layer is 2 to 500 as a ratio represented by base metal layer/coating layer, the third metal consists of Ni, the content of the first metal is 30 to 90 mass% with respect to the total mass of the first metal, the second metal, and the third metal, the content of the second metal is 3 to 30 mass% with respect to the total mass of the first metal, the second metal, and the third metal, the content of the third metal is 5 to 50 mass% with respect to the total mass of the first metal, the second metal, and the third metal, the ratio of the content of the first metal to the content of the second metal is 4 or more and 30 or less as a mass ratio represented by content of first metal/content of second metal, the ratio of the content of the first metal to the content of the third metal is 1 or more and 5 or less as a mass ratio represented by content of first metal/content of third metal, and the ratio of the content of the third metal to the content of the second metal is 1 or more and 30 or less as a mass ratio represented by content of third metal/content of second metal.

In the joining material according to the third embodiment, it is preferable that the thickness of the base metal layer is 1 to 500 µm, the thickness of the coating layer is 1 to 100 µm, the ratio of the thickness of the base metal layer to the thickness of the coating layer is 2 to 500 as a ratio represented by base metal layer/coating layer, the third metal consists of Ni, the content of the first metal is 30 to 90 mass% with respect to the total mass of the first metal, the second metal, and the third metal, the content of the second metal is 3 to 30 mass% with respect to the total mass of the first metal, the second metal, and the third metal, the content of the third metal is 5 to 50 mass% with respect to the total mass of the first metal, the second metal, and the third metal, the ratio of the content of the first metal to the content of the second metal is 4 or more and 30 or less as a mass ratio represented by content of first metal/content of second metal, the ratio of the content of the first metal to the content of the third metal is 1 or more and 5 or less as a mass ratio represented by content of first metal/content of third metal, and the ratio of the content of the third metal to the content of the second metal is 1 or more and 30 or less as a mass ratio represented by content of third metal/content of second metal.

The joining material according to the third embodiment can be manufactured by the same method as the joining material according to the first embodiment.

The joining material according to the third embodiment can suppress the generation of voids in the solder joint portion, as in the joining material according to the first embodiment.

In addition, in the joining material according to the third embodiment, the base metal layer contains the third metal, and thus the thermal conductive properties of the solder joint portion can be further enhanced. The reason why such an effect is obtained is not clear, but is presumed as follows.

Intermetallic compounds have a lower thermal conductivity than Cu, Ni, and the like. For example, the thermal conductivities of Cu and Ni are 401 W/m·K and 88.5 W/m·K, respectively, and the thermal conductivities of the intermetallic compounds Cu₆Sn₅ (Cu₃Sn) and Ni₃Sn₄ are 34 W/m·K and 20 W/m·K, respectively.

The entire surface of the third metal is formed of the metal containing Ni, and Ni has low reactivity with Sn, so that Ni₃Sn₄ is not easily generated. That is, since the surface of the third metal is less likely to react with Sn in the base metal layer to form an intermetallic compound, it is possible to increase the thermal conductive properties of the solder joint portion.

### (Joining Material: Fourth Embodiment)

A joining material according to a fourth embodiment has a base metal layer and a coating layer that covers at least one surface of the base metal layer.

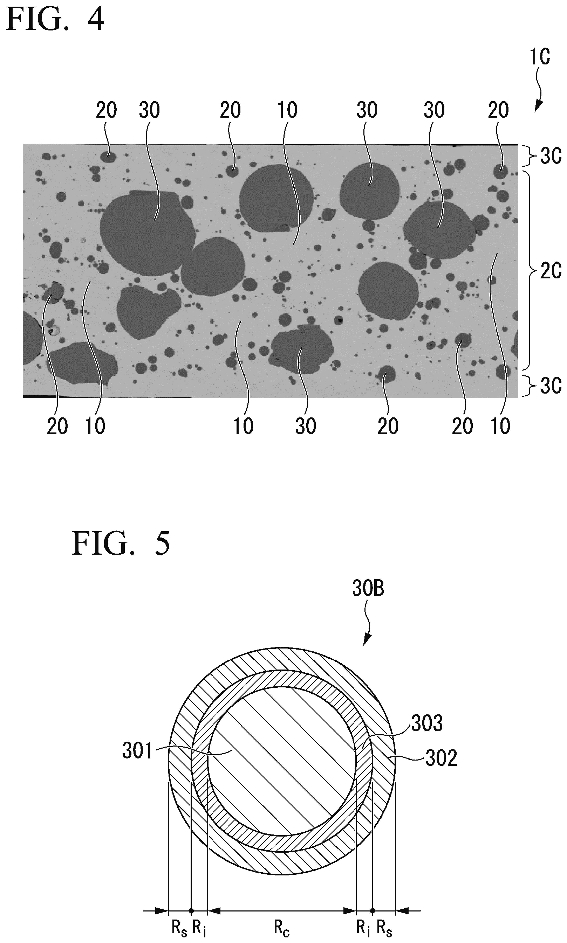

FIG. 4 is an example of an SEM image showing a cross section in a thickness direction of the joining material according to the fourth embodiment. In FIG. 4, a joining material 1C has a base metal layer 2C and a coating layer 3C that covers both surfaces of the base metal layer 2C.

The base metal layer 2C shown in FIG. 4 has a metal structure including a first phase 10 that is a continuous phase, a second phase 20 that is dispersed in the first phase, and a third phase 30 that is dispersed in the first phase.

In the joining material 1C shown in FIG. 4, the thickness of the base metal layer is 285 µm, and the thickness of the coating layer is 7.5 µm. In the base metal layer 2C, a content of a metal forming the first phase is 65 mass% with respect to a total mass of the base metal layer, a content of a metal forming the second phase is 10 mass% with respect to the total mass of the base metal layer, and a content of a metal forming the third phase is 35 mass% with respect to the total mass of the base metal layer. A content of Ni in the second phase is 90 mass% with respect to a total mass of the second phase, and a content of Fe in the second phase is 10 mass% with respect to the total mass of the second phase.

The joining material according to the fourth embodiment is a clad material in which the coating layer is bonded to at least one surface of the base metal layer.

The joining material according to the fourth embodiment is the same as the joining material according to the second embodiment, except that the base metal layer has the third phase.

In the base metal layer, the third phase 30 is dispersed in the first phase 10.

The third phase 30 has an entire surface constituted by a metal containing Ni.

The joining material according to the fourth embodiment is the same as the joining material according to the second embodiment, except that the base metal layer has the third phase.

The description of the metal containing Ni over the entire surface, a particle size thereof, a content thereof, and the like is the same as in <Third Metal> in the third embodiment.

The description of an overall melting point of the metal forming the entire surface of the third phase is the same as the melting point of the metal forming the entire surface of the third metal.

The description of the metal constituting the first phase, a content thereof, and the like is the same as in <First Metal> in the third embodiment.

The description of the metal constituting the second phase, a content thereof, and the like is the same as that in <Second Metal> in the third embodiment.

In a case where an entirety of the third phase has a uniform composition, an overall composition of the metal constituting the third phase is different from an overall composition of the metal constituting the first phase and an overall composition of the alloy constituting the second phase.

The description of an overall melting point of the metal constituting the third phase is the same as the description of the melting point of the third metal.

A particle size of the third phase can be set to a particle size of a third metal powder prepared for forming the third phase.

In a case where the third phase has a structure composed of a core portion and a surface layer covering the core portion, an overall composition of a metal forming the surface layer of the third phase is different from the overall composition of the metal constituting the first phase and the overall composition of the alloy constituting the second phase.

An overall melting point of the metal forming the surface layer of the third phase is the same as the melting point of the metal forming the surface layer of the third metal.

The description of a diameter of the core portion and a thickness of the surface layer in the third phase is the same as the diameter Rc of the core portion and the thickness Rs of the surface layer in the third metal.

In the joining material according to the fourth embodiment, the description of a composition of the coating layer is the same as in the second embodiment.

In the joining material according to the fourth embodiment, the description of the thicknesses of the base metal layer and the coating layer is the same as in the third embodiment.

The thickness of the base metal layer may be, for example, 1 to 5,000 µm, 3 to 5,000 µm, 5 to 5,000 µm, 10 to 5,000 µm, 15 to 5,000 µm, 20 to 5,000 µm, 25 to 5,000 µm, 30 to 5,000 µm, 40 to 5,000 µm, 50 to 5,000 µm, 75 to 5,000 µm, 100 to 5,000 µm, 125 to 5,000 µm, 150 to 5,000 µm, 175 to 5,000 µm, 200 to 5,000 µm, 250 to 5,000 µm, 290 to 5,000 µm, 300 to 5,000 µm, 350 to 5,000 µm, 400 to 5,000 µm, 500 to 5,000 µm, 750 to 5,000 µm, 1,000 to 5,000 µm, 1,200 to 5,000 µm, 1,500 to 5,000 µm, 1 to 4,000 µm, 1 to 3,500 µm, 1 to 3,000 µm, 1 to 2,500 µm, 1 to 2,000 µm, 1 to 1,500 µm, 1 to 1,200 µm, 1 to 1,000 µm, 1 to 750 µm, 1 to 500 µm, 1 to 400 µm, 1 to 350 µm, 1 to 300 µm, 1 to 290 µm, 1 to 250 µm, 1 to 200 µm, 1 to 175 µm, 1 to 150 µm, 1 to 125 µm, 1 to 100 µm, 1 to 75 µm, 1 to 50 µm, 1 to 40 µm, 1 to 30 µm, 1 to 25 µm, 1 to 20 µm, or 1 to 15 µm. When the thickness of the base metal layer is equal to or more than the above-described lower limit, the heat resistance of the solder joint portion is more easily enhanced. When the thickness of the base metal layer is equal to or less than the above-described upper limit, the generation of voids in the solder joint portion that comes in contact with the object to be joined is more easily suppressed.

The thickness of the coating layer may be, for example, 1 to 150 µm, 3 to 150 µm, 5 to 150 µm, 7.5 to 150 µm, 10 to 150 µm, 12.5 to 150 µm, 15 to 150 µm, 20 to 150 µm, 25 to 150 µm, 30 to 150 µm, 40 to 150 µm, 50 to 150 µm, 75 to 150 µm, 1 to 125 µm, 1 to 100 µm, 1 to 75 µm, 1 to 50 µm, 1 to 40 µm, 1 to 30 µm, 1 to 25 µm, 1 to 20 µm, 1 to 15 µm, 1 to 12.5 µm, 1 to 10 µm, 1 to 7.5 µm, 1 to 5 µm, or 1 to 3 µm.

When the thickness of the coating layer is equal to or more than the above-described lower limit, the generation of voids in the solder joint portion that comes in contact with the object to be joined is more easily suppressed. When the thickness of the coating layer is equal to or less than the above-described upper limit, the heat resistance of the solder joint portion is more easily enhanced.

The thickness of the joining material may be, for example, 2 to 5,300 µm, 2 to 4,000 µm, 2 to 3,000 µm, 2 to 2,000 µm, 2 to 1,750 µm, 2 to 1,510 µm, 2 to 1,200 µm, 2 to 1,000 µm, 2 to 750 µm, 2 to 500 µm, 2 to 400 µm, 2 to 300 µm, 2 to 250 µm, 2 to 200 µm, 2 to 150 µm, 2 to 100 µm, 2 to 75 µm, 2 to 50 µm, 2 to 40 µm, 2 to 30 µm, 5 to 5,300 µm, 10 to 5,300 µm, 15 to 5,300 µm, 20 to 5,300 µm, 30 to 5,300 µm, 40 to 5,300 µm, 50 to 5,300 µm, 75 to 5,300 µm, 100 to 5,300 µm, 150 to 5,300 µm, 200 to 5,300 µm, 250 to 5,300 µm, 300 to 5,300 µm, 400 to 5,300 µm, 500 to 5,300 µm, 750 to 5,300 µm, 1,000 to 5,300 µm, or 1,200 to 5,300 µm.

A ratio of the thickness of the base metal layer to the thickness of the coating layer may be, for example, 2 to 500, 3 to 500, 5 to 500, 7.5 to 500, 10 to 500, 15 to 500, 20 to 500, 30 to 500, 50 to 500, 100 to 500, 200 to 500, 2 to 400, 2 to 350, 2 to 300, 2 to 250, 2 to 200, 2 to 150, 2 to 100, 2 to 75, 2 to 60, 2 to 58, 2 to 50, 2 to 30, 2 to 20, 2 to 15, 2 to 10, 2 to 7.5, 2 to 5, or 2 to 3 as a ratio represented by base metal layer/coating layer.

When the ratio represented by base metal layer/coating layer is within the above-described range, the heat resistance of the solder joint portion is more easily enhanced, and furthermore, the generation of voids in the solder joint portion that comes in contact with the object to be joined is more easily suppressed. When the ratio is equal to or more than the lower limit of the above-described range, the heat resistance of the solder joint portion is more easily enhanced. When the ratio is equal to or less than the upper limit of the above-described range, the generation of voids in the solder joint portion is more easily suppressed.

Hereinafter, the ratio of the thickness of the base metal layer to the thickness of the coating layer means a ratio represented by base metal layer (µm)/coating layer (µm).

In the joining material according to the fourth embodiment, it is preferable that the thickness of the coating layer is 1 to 150 µm and the ratio of the thickness of the base metal layer to the thickness of the coating layer is 2 to 300, it is more preferable that the thickness of the coating layer is 5 to 150 µm and the ratio of the thickness of the base metal layer to the thickness of the coating layer is 2 to 200, it is still more preferable that the thickness of the coating layer is 5 to 150 µm and the ratio of the thickness of the base metal layer to the thickness of the coating layer is 2 to 100, and it is particularly preferable that the thickness of the coating layer is 5 to 75 µm and the ratio of the thickness of the base metal layer to the thickness of the coating layer is 2 to 60.

When the thickness of the coating layer is within the above-described range and the ratio of the thickness of the base metal layer to the thickness of the coating layer is within the above-described range, the heat resistance of the solder joint portion is more easily enhanced, and the generation of voids in the solder joint portion is more easily suppressed.

In the joining material according to the fourth embodiment, it is preferable that the thickness of the base metal layer is 1 to 5,000 µm, the thickness of the coating layer is 1 to 150 µm, the ratio of the thickness of the base metal layer to the thickness of the coating layer is 2 to 500 as a ratio represented by base metal layer/coating layer, the metal constituting the third phase consists of Ni, the content of the metal constituting the first phase is 30 to 90 mass% with respect to a total mass of the metal constituting the first phase, the alloy constituting the second phase, and the metal constituting the third phase, the content of the alloy constituting the second phase is 3 to 30 mass% with respect to the total mass of the metal constituting the first phase, the alloy constituting the second phase, and the metal constituting the third phase, the content of the metal constituting the third phase is 5 to 50 mass% with respect to the total mass of the metal constituting the first phase, the alloy constituting the second phase, and the metal constituting the third phase, a ratio of the content of the metal constituting the first phase to the content of the alloy constituting the second phase is 4 or more and 30 or less as a mass ratio represented by content of metal constituting first phase/content of alloy constituting second phase, a ratio of the content of the metal constituting the first phase to the content of the metal constituting the third phase is 1 or more and 5 or less as a mass ratio represented by content of metal constituting first phase/content of metal constituting third phase, and a ratio of the content of the metal constituting the third phase to the content of the alloy constituting the second phase is 1 or more and 30 or less as a mass ratio represented by content of metal constituting third phase/content of alloy constituting second phase.

In the joining material according to the fourth embodiment, it is preferable that the thickness of the base metal layer is 1 to 500 µm, the thickness of the coating layer is 1 to 100 µm, the ratio of the thickness of the base metal layer to the thickness of the coating layer is 2 to 500 as a ratio represented by base metal layer/coating layer, the metal constituting the third phase consists of Ni, the content of the metal constituting the first phase is 30 to 90 mass% with respect to the total mass of the metal constituting the first phase, the alloy constituting the second phase, and the metal constituting the third phase, the content of the alloy constituting the second phase is 3 to 30 mass% with respect to the total mass of the metal constituting the first phase, the alloy constituting the second phase, and the metal constituting the third phase, the content of the metal constituting the third phase is 5 to 50 mass% with respect to the total mass of the metal constituting the first phase, the alloy constituting the second phase, and the metal constituting the third phase, the ratio of the content of the metal constituting the first phase to the content of the alloy constituting the second phase is 4 or more and 30 or less as a mass ratio represented by content of metal constituting first phase/content of alloy constituting second phase, the ratio of the content of the metal constituting the first phase to the content of the metal constituting the third phase is 1 or more and 5 or less as a mass ratio represented by content of metal constituting first phase/content of metal constituting third phase, and the ratio of the content of the metal constituting the third phase to the content of the alloy constituting the second phase is 1 or more and 30 or less as a mass ratio represented by content of metal constituting third phase/content of alloy constituting second phase.

In the joining material according to the fourth embodiment, as in the joining material according to the third embodiment, the generation of voids in the solder joint portion can be suppressed, and the thermal conductive properties of the solder joint portion can be further enhanced.

The joining material according to the fourth embodiment can be manufactured by the same manufacturing method as the method for manufacturing the joining material according to the second embodiment, except that the third metal powder is further used in addition to the first metal powder and the second metal powder.

The first metal powder, the second metal powder, and the third metal powder are the same as <First metal>, <Second metal>, and <Third metal> described above, respectively.

The joining material according to the fourth embodiment can be manufactured by the same method as the joining material according to the second embodiment.

### (Joining Material: Fifth Embodiment)

In a joining material according to a fifth embodiment, a base metal layer further contains a third metal 30B of which an entire surface is formed of a metal containing Ni. As illustrated in FIG. 5, the third metal 30B has an intermediate layer 303 between a core portion 301 and a surface layer 302 that covers the core portion 301. The intermediate layer 303 is adjacent to the core portion 301 and is also adjacent to the surface layer 302. Ri means a thickness of the intermediate layer 303.

The joining material according to the fifth embodiment is the same as the joining material according to the first embodiment, except that the base metal layer contains the third metal 30B.

The intermediate layer may cover a part of a surface of the core portion or may cover an entire surface of the core portion, and preferably covers the entire surface of the core portion. In FIG. 5, the intermediate layer 303 covers the entire surface of the core portion 301.

A ratio of an area of the surface of the core portion covered with the intermediate layer with respect to a total surface area (100%) of the core portion is preferably 50% or more and 100% or less, more preferably 70% or more and 100% or less, even more preferably 90% or more and 100% or less, particularly preferably 95% or more and 100% or less, and most preferably 100%.

A composition of a metal forming the intermediate layer is different from a metal forming the core portion and a metal forming the surface layer.

The intermediate layer may be one layer or two or more layers.

The metal forming the intermediate layer may be a single elemental metal or an alloy formed of two or more kinds of metal elements.

Examples of the metal that may be contained in the intermediate layer include Ag, Cu, In, Bi, Ni, Ge, P, Co, Ga, Zn, Sb, Pb, Au, Al, Pt, Pd, Fe, Mn, Zr, Sn, and As. These metals may include one kind or two or more kinds. A metal group which may be contained in the intermediate layer can be optionally selected from these metals.

The intermediate layer may contain unavoidable impurities in addition to the above-described metals. The effects of the present invention are not affected even in a case where unavoidable impurities are contained.

The intermediate layer may be one kind or two or more kinds.

The thickness Ri of the intermediate layer may be, for example, 0.01 µm or more and 100 µm or less, 0.05 µm or more and 50 µm or less, or 0.1 µm or more and 10 µm or less.

The intermediate layer may be a plating formed by a plating treatment.

Examples of a method of the plating treatment include known electroplating and electroless plating.

Examples of the core portion 301 and the surface layer 302 in the third metal 30B include those described above for the third metal 30A.

The third metal 30B may be one kind or two or more kinds.

The joining material according to the fifth embodiment can suppress the generation of voids in the solder joint portion and can further enhance the thermal conductive properties of the solder joint portion, as in the joining material according to the third embodiment.

By providing the third metal 30B with the intermediate layer 303, it is easy to provide the surface layer 302 of the third metal 30B.

### (Other Embodiments)

In the joining material according to other embodiments, only one surface of the base metal layer may be covered with the coating layer. The joining material according to other embodiments may be a clad material in which one surface of the base metal layer and the coating layer are pressure-bonded to each other.

The joining material in which only one surface of the base metal layer is covered with the coating layer can be manufactured by <Pressure Bonding Step A> described above in the method for manufacturing the joining material according to the second embodiment.

Alternatively, in a joining material according to other embodiments, a base metal layer may have a fourth metal in addition to the first metal, the second metal, and the third metal described in the third embodiment. The fourth metal is a metal different from the first metal, the second metal, and the third metal.

A metal forming the fourth metal may be a single elemental metal, a mixture of two or more kinds of elemental metals, an alloy formed of two or more kinds of metal elements, a mixture of alloys formed of two or more kinds of metal elements, or a mixture of an alloy formed of two or more kinds of metal elements and an elemental metal.

Examples of the metal that may be contained in the fourth metal include Ag, Cu, In, Bi, Ni, Ge, P, Co, Ga, Zn, Sb, Pb, Au, Al, Pt, Pd, Fe, Mn, Zr, Sn, and As. These metals may include one kind or two or more kinds. A metal group that may be contained in the fourth metal can be optionally selected from these metals.

A particle size of a fourth metal powder is preferably 0.1 to 1,000 µm, more preferably 1 to 100 µm, and still more preferably 5 to 50 µm.

A metal forming the fourth metal powder may include one kind or two or more kinds.

The fourth metal powder is not limited to one kind, and two or more kinds of metal powders having different compositions may be used.

Alternatively, the joining material according to the other embodiments is a joining material having the base metal layer described in the above embodiments and a coating layer that covers at least one surface of the base metal layer, and is manufactured, for example, by a hot-dip plating method, a sputtering method, or the like.

In a case where the hot-dip plating method is used, for example, the base metal layer is immersed in a molten metal forming the coating layer and cooled to cover at least one surface of the base metal layer with the metal forming the coating layer, thereby obtaining the joining material according to the present embodiment.

In a case where the sputtering method is used, the metal forming the coating layer is sputtered onto the base metal layer to cover at least one surface of the base metal layer with the metal forming the coating layer, thereby obtaining the joining material according to the present embodiment.

Alternatively, the joining material according to the other embodiments may be obtained by coating the base metal layer in the second embodiment with the coating layer, for example, by a hot-dip plating method, a sputtering method, or the like.

### (Solder Joint)

In one embodiment, the present invention relates to a solder joint formed using the joining material according to the above embodiment. The solder joint of the present embodiment does not melt even in a case where a power semiconductor operates at a high temperature, and can suppress the generation of voids in a solder joint portion.

### (Method for Manufacturing Solder Joint)

In one embodiment, the present invention relates to a method for manufacturing a solder joint, in which a joined portion is formed between objects using the joining material manufactured by (Method for Manufacturing Joining Material) described above.

The objects to be joined by applying such a manufacturing method are not particularly limited. For example, by applying such a manufacturing method, a semiconductor element and a substrate can be joined to each other.

Examples of the semiconductor element include a silicon carbide (SiC) chip and a Si chip.

Examples of the substrate include a circuit board, a ceramic substrate, a metal substrate, and a direct copper bonding (DCB) substrate. An electrode on the substrate may be, for example, a Cu electrode or a Cu electrode that has been treated with any of Sn plating, Ni plating, Ni-Au plating, Ni-Pd plating, and Ni-Pd-Au plating.

In addition, during the bonding, a flux may be applied in advance to one or both surfaces of the joining material that serve as joining surfaces, a joining surface of the semiconductor element, or a joining surface of the substrate.

A temperature in a case of joining the semiconductor element to the substrate is, for example, preferably 120°C or higher and 400°C or lower, may be 200°C or higher and 400°C or lower, or may be 250°C or higher and 400°C or lower, and the method for manufacturing a solder joint of the present embodiment is useful for joining under high-temperature conditions (250°C or higher).

An atmosphere in a case of joining the objects may be an air atmosphere, an inert atmosphere such as a nitrogen atmosphere, or a reducing atmosphere.

In a case of the nitrogen atmosphere, a pressure applied during the joining is preferably adjusted to 0.1 MPa or more and 10 MPa or less. By joining the objects in such a nitrogen atmosphere, the effect of suppressing the generation of voids is enhanced.

In a case of the reducing atmosphere, the objects can be joined without pressurization.

A joined portion can be formed between the objects using the joining material of the above-described embodiment. A shear strength of the joined portion may be 12 to 100 N, 16 to 50 N, or 20 to 35 N under conditions of 6.0 mm/min and 250°C.

The shear strength of the joined portion can be measured, for example, as follows.

A target joining material is cut to a size of 5 mm × 5 mm to obtain a test piece. Next, the test piece is mounted on an electroless Ni-plated Cu substrate having a thickness of 0.5 mm and a size of 50 mm × 50 mm. A surface roughness of the substrate is set to 0.31 µm for Sa and 8.53 µm for Sz. For example, a laser microscope can be used to measure the surface roughness of the substrate. As the laser microscope, for example, VK-X1000 (manufactured by Keyence Corporation) can be used.

Next, a Cu plate having a thickness of 0.5 mm and a size of 5 mm × 5 mm is mounted on the joining material.

Next, soldering is performed in a reflow furnace under pressure in a formic acid atmosphere, using a profile with a peak temperature of 250°C and a cooling rate of 2 °C/sec, to produce a solder joint.

Next, a shear strength (N) of the produced solder joint at the joined portion is measured by a shear strength measuring device under conditions of 6.0 mm/min and 250°C. As the shear strength measuring device, for example, STR-1000 manufactured by Retsch can be used.

### Examples

Hereinafter, the present invention will be described with reference to Examples, but the present invention is not limited to Examples.

### <Manufacturing of Base Metal Sheet and Coating Sheet>

Base metal sheets (A) to (G) were manufactured by the following procedure.

The base metal sheets (A) to (G) are preform solders obtained by roll forming using the following first metal powder, second metal powder, third metal powder (1), and third metal powder (2) as raw materials.

The particle size of the metal powder was measured in terms of average particle size on a volume basis using a laser diffraction/scattering type particle size distribution analyzer (MT3300EXII) manufactured by MicrotracBEL Corp.

The melting point of the metal powder was determined by differential scanning calorimetry (DSC). The first metal powder was measured with DSC7020 manufactured by Hitachi High-Tech Science Corporation, and the second metal powder and the third metal powder were measured with DSC 404-F3 Pegasus manufactured by NETZSCH.

The thickness Rs of the surface layer of the third metal powder was measured using an Auger electron spectroscopy apparatus.

### First metal powder Sn

Metal powder (100 mass% Sn powder) of 100 mass% Sn, particle size: 65 µm, melting point: 232°C

### Second metal powder NilOFe

Metal powder (Ni-10 mass% Fe powder) composed of an alloy of 90 mass% Ni and 10 mass% Fe, particle size: 12.8 µm, melting point: 1444°C

### Third metal powder (1) Ni-plated Cu

As the core portions of the third metal powder (1), 100 mass% Cu core balls were used. The particle size of the core portion (that is, the core diameter Rc of the core portion) was 100 µm.

The surface layer of the third metal powder (1) was plating of 100 mass% Ni. A plating thickness (that is, the thickness Rs of the surface layer) was 2 µm.

The plated core balls of the third metal powder (1) are obtained by covering the entire surface of the 100 mass% Cu core balls with 100 mass% Ni plating. Each 100 mass% Ni plating was formed by electroplating.

### Third metal powder (2) Ni

Metal powder (100 mass% Ni powder) of 100 mass% Ni, particle size: 100 µm

### Base metal sheet (A) Sn-40 (Ni10Fe)

### Mixing step:

A metal powder mixture was prepared by stirring 60 parts by mass of the first metal powder and 40 parts by mass of the second metal powder.

### Rolling step:

Next, the prepared metal powder mixture was introduced into a hopper of a twin-roll rolling mill, a surface temperature of the rolling roll was set to 100°C, and a rolling load was set to about 25 kN, thereby obtaining a strip-shaped rolled material. Thereafter, the rolled material was rolled to obtain a strip-shaped base metal sheet (A) having a predetermined thickness.

### Base metal sheet (B) Sn-70 (Ni10Fe)

A strip-shaped base metal sheet (B) having a predetermined thickness was obtained in the same manner as in the method for manufacturing the base metal sheet (A), except that a metal powder mixture was prepared by stirring 30 parts by mass of the first metal powder and 70 parts by mass of the second metal powder.

### Base metal sheet (C) Sn-20 (Ni10Fe)

A strip-shaped base metal sheet (C) having a predetermined thickness was obtained in the same manner as in the method for manufacturing the base metal sheet (A), except that a metal powder mixture was prepared by stirring 80 parts by mass of the first metal powder and 20 parts by mass of the second metal powder.

### Base metal sheet (D) Sn-10 (Ni10Fe)

A strip-shaped base metal sheet (D) having a predetermined thickness was obtained in the same manner as in the method for manufacturing the base metal sheet (A), except that a metal powder mixture was prepared by stirring 90 parts by mass of the first metal powder and 10 parts by mass of the second metal powder.

### Base metal sheet (E) Sn-3 (Ni10Fe)

A strip-shaped base metal sheet (E) having a predetermined thickness was obtained in the same manner as in the method for manufacturing the base metal sheet (A), except that a metal powder mixture was prepared by stirring 97 parts by mass of the first metal powder and 3 parts by mass of the second metal powder.

### Base metal sheet (F) Sn-5 (Ni10Fe)-35 (Ni-plated Cu)

A strip-shaped base metal sheet (F) having a predetermined thickness was obtained in the same manner as in the method for manufacturing the base metal sheet (A), except that a metal powder mixture was prepared by stirring 60 parts by mass of the first metal powder, 5 parts by mass of the second metal powder, and 35 parts by mass of the third metal powder (1).

### Base metal sheet (G) Sn-5 (Ni10Fe)-35Ni

A strip-shaped base metal sheet (G) having a predetermined thickness was obtained in the same manner as in the method for manufacturing the base metal sheet (A), except that a metal powder mixture was prepared by stirring 60 parts by mass of the first metal powder, 5 parts by mass of the second metal powder, and 35 parts by mass of the third metal powder (2).

### Coating sheets (X) to (Z) were manufactured by the following procedure.

As raw materials, the following Sn, Sn-3Ag-0.5Cu alloy, and Sn-5Sb alloy were used.

### Sn, melting point: 232°C

Sn-3Ag-0.5Cu (3 mass% Ag, 0.5 mass% Cu, remainder: Sn), melting point: 220°C
Sn-5Sb (5 mass% Sb, remainder: Sn), melting point: 243°C

### Coating sheet (X) Sn

Sn was processed into a plate shape, rolled to a predetermined thickness, and cut to a predetermined size to obtain a strip-shaped coating sheet (X) having a predetermined thickness.

### Coating sheet (Y) Sn-3Ag-0.5Cu

A coating sheet (Y) having a predetermined thickness was obtained in the same manner as in the method for manufacturing the coating sheet (X), except that the Sn-3Ag-0.5Cu alloy was used instead of Sn.

### Coating sheet (Z) Sn-5Sb

A coating sheet (Z) having a predetermined thickness was obtained in the same manner as in the method for manufacturing the coating sheet (X), except that the Sn-5Sb alloy was used instead of Sn.

### <Manufacturing of Joining Material>

A joining material of each example was produced using the base metal sheets (A) to (G) and the coating sheets (X) to (Z). In the produced joining material of each example, the thicknesses of the base metal layer and the coating layer were as shown in Tables 1 to 8.

### (Example A1)

A metal sheet was obtained by rolling the coating sheet (X) onto one surface of the base metal sheet (A). Next, the obtained single metal sheet was bent and rolled while bringing the surfaces of the base metal layer into contact with each other, thereby obtaining a joining material of Example A1 in which both surfaces of the base metal layer (A) were covered with the coating layer (X). In this joining material, the thickness of the base metal layer (A) was 150 µm, and the thickness of the coating layer (X) was 75 µm.

### (Examples A2 to A11)

As shown in Table 1, joining materials of Examples A2 to A6 and A8 to A11 were manufactured in the same manner as in Example A1, except that the joining materials were manufactured using the base metal sheet (A) and the coating sheets (X) to (Z) such that the base metal layer and the coating layer had predetermined thicknesses.

In Example A7, a joining material was manufactured in the same manner as in Example A1, except that only one surface of the base metal sheet (A) was covered with the coating sheet (X).

### (Comparative Examples A1 to A7)

As shown in Table 2, Comparative Examples A1 to A7 were manufactured in the same manner as in Example A1, except that the base metal sheet (A) was used, no coating sheet was used, forming was performed such that the base metal layer had a predetermined thickness.

### (Examples B1 to B3, C1 to C4, D1 to D4, E1 to E4, F1 to F4, and G1 to G4)

As shown in Tables 3 to 8, a joining material of each example was manufactured in the same manner as in Example A1, except that the joining material was manufactured using the base metal sheets (B) to (G) and the coating sheet (X) such that the base metal layer and the coating layer had predetermined thicknesses.

FIG. 2 shows an SEM image showing a cross section in a thickness direction of the joining material of Example C1.

### (Comparative Examples B1 to B3, C1 to C4, D1 to D4, E1 to E2, F1 to F4, and G1 to G4)

As shown in Tables 3 to 8, each comparative example was manufactured in the same manner as in Example A1, except that the base metal sheets (B) to (G) were used, no coating sheet was used, and forming was performed such that the base metal layer had a predetermined thickness.

### <Evaluation>

Solder joints were manufactured from the produced joining material, and a void ratio at a joined portion was measured as follows.

### <<Manufacturing of Solder Joints>>

The joining material of each example was cut into a size of 5 mm × 5 mm to obtain a test piece of each example.

The test piece of each example was mounted on an electroless Ni-plated Cu substrate having a thickness of 0.5 mm and a size of 50 mm × 50 mm. A surface roughness of the substrate was 0.31 µm for Sa and 8.53 µm for Sz. The surface roughness was measured using a laser microscope VK-X1000 (manufactured by Keyence Corporation).

A Cu plate having a thickness of 0.5 mm and a size of 5 mm × 5 mm was mounted on the joining material, and soldered.

Thereafter, soldering was performed in a reflow furnace under pressure in a formic acid atmosphere, using a profile with a peak temperature of 250°C and a cooling rate of 2 °C/sec, to produce a solder joint.

<<Evaluation of Void Suppression Ability>> For the produced solder joint, a void ratio at a joined portion was measured as follows. The results of the evaluation based on these measurements are shown in Tables 1 to 9.

### [Measurement of Void Ratio at Joined Portion]

### (1) Measurement Method

The produced solder joint was sealed with a resin, polished to expose a joint cross section, and a cross-sectional SEM photograph was taken using an electron microscope (JSM-7000F manufactured by JEOL Ltd.). In the cross-sectional SEM photograph, a void ratio (area%) was calculated for the entire portion joined with the joining material, excluding upper and lower members.

For the calculation, image analysis software "Scandium" manufactured by Seika Digital Image Co., Ltd. was used, and the content of intermetallic compounds, the content of Sn, the content of Bi, and the content of In (each in area%) at the joined portion were calculated from the contrast.

The sum of the content of the intermetallic compounds, the content of Sn, the content of Bi, the content of In, and the area% of voids at the joined portion was set to 100 area%.

### (2) Determination Criteria for Void Ratio Suppression Ability

| | |
|---|---|
| A | Void ratio was less than 20%. |
| B | Void ratio was 20% or more and less than 25%. |
| C | Void ratio was 25% or more. |

### <<Evaluation of Heat Resistance>>

For the solder joints produced using the joining materials of Example A1, Example A6, and Comparative Example A7, the shear strength of the solder joint portion was measured as follows, and the heat resistance was evaluated. The measurement results are shown in Table 10.

### [Measurement of Shear Strength]

For the produced solder joints, the shear strength (N) at the joined portion was measured under conditions of 6.0 mm/min and 250°C by a shear strength measuring device (STR-1000, manufactured by Rhesca Co., Ltd.). The higher the shear strength is, the better the heat resistance of the solder joint portion is.

**[Table 1]**

| | Example A1 | Example A2 | Example A3 | Example A4 | Example A5 | Example A6 | Example A7 | Example A8 |
|---|---|---|---|---|---|---|---|---|
| Base metal sheet | Base metal sheet (A) | | | | Sn-40 (Ni10Fe) | | | |
| Thickness of base metal layer [µm] | 150 | 250 | 290 | 290 | 290 | 298 | 299 | 1500 |
| Coating sheet | Coating sheet (X) Sn100 | Coating sheet (X) Sn100 | Coating sheet (X) Sn100 | Coating sheet (Y) Sn-3Ag-0.5Cu | Coating sheet (Z) Sn-5Sb | Coating sheet (X) Sn100 | Coating sheet (X) Sn100 | Coating sheet (X) Sn100 |
| Thickness of coating layer [µm] | 75 | 25 | 5 | 5 | 5 | 1 | 1 | 5 |
| Coating layer | Both surfaces | Both surfaces | Both surfaces | Both surfaces | Both surfaces | Both surfaces | One surface | Both surfaces |
| Thickness ratio (base metal layer/ coating laver) | 2 | 10 | 58 | 58 | 58 | 298 | 299 | 300 |
| Void suppression ability | A | A | A | A | A | B | B | B |

**[Table 2]**

| | Example A9 | Example A10 | Example A11 |
|---|---|---|---|
| Base metal sheet | Base metal sheet (A) | | Sn-40 (Ni10Fe) |
| Thickness of base metal layer [µm] | 50 | 25 | 15 |
| Coating sheet | Coating sheet (X) Sn100 | Coating sheet (X) Sn100 | Coating sheet (X) Sn100 |
| Thickness of coating layer [µm] | 25 | 12.5 | 7.5 |
| Coating layer | Both surfaces | Both surfaces | Both surfaces |
| Thickness ratio (base metal layer/ coating layer) | 2 | 2 | 2 |
| Void suppression ability | A | A | A |

**[Table 3]**

| | Comparative Example A1 | Comparative Example A2 | Comparative Example A3 | Comparative Example A4 | Comparative Example A5 | Comparative Example A6 |
|---|---|---|---|---|---|---|
| Base metal sheet | Base metal sheet (A) | | | Sn-40 (Ni10Fe) | | |
| Thickness of base metal layer [µm] | 150 | 250 | 290 | 298 | 299 | 1495 |
| Coating sheet | - | - | - | - | - | - |
| Thickness of coating layer [µm] | - | - | - | - | - | - |
| Coating layer | Absent | Absent | Absent | Absent | Absent | Absent |
| Thickness ratio (base metal layer/ coating layer) | - | - | - | - | - | - |
| Void suppression ability | C | C | C | C | C | C |

**[Table 4]**

| | Example B1 | Example B2 | Example B3 | Comparative Example B1 | Comparative Example B2 | Comparative Example B3 |
|---|---|---|---|---|---|---|
| Base metal sheet | Base metal sheet (B) | | | | Sn-70 (Ni10Fe) | |
| Thickness of base metal layer [µm] | 150 | 250 | 290 | 150 | 250 | 290 |
| Coating sheet | Coating sheet (X) Sn100 | Coating sheet (X) Sn100 | Coating sheet (X) Sn100 | - | - | - |
| Thickness of coating layer [µm] | 75 | 25 | 5 | - | - | - |
| Coating layer | Both surfaces | Both surfaces | Both surfaces | Absent | Absent | Absent |
| Thickness ratio (base metal layer/ coating layer) | 2 | 10 | 58 | - | - | - |
| Void suppression ability | A | A | A | C | C | C |

**[Table 5]**

| | Example C1 | Example C2 | Example C3 | Example C4 | Comparative Example C1 | Comparative Example C2 | Comparative Example C3 | Comparative Example C4 |
|---|---|---|---|---|---|---|---|---|
| Base metal sheet | Base metal sheet (C) | | | | | Sn-20 (Nil0Fe) | | |
| Thickness of base metal layer [µm] | 150 | 250 | 290 | 298 | 150 | 250 | 290 | 299 |
| Coating sheet | Coating sheet (X) Sn100 | Coating sheet (X) Sn100 | Coating sheet (X) Sn100 | Coating sheet (X) Sn100 | - | - | - | - |
| Thickness of coating layer [µm] | 75 | 25 | 5 | 1 | - | - | - | - |
| Coating layer | Both surfaces | Both surfaces | Both surfaces | Both surfaces | Absent | Absent | Absent | Absent |
| Thickness ratio (base metal layer/ coating layer) | 2 | 10 | 58 | 298 | - | - | - | - |
| Void suppression ability | A | A | A | B | C | C | C | C |

**[Table 6]**

| | Example D1 | Example D2 | Example D3 | Example D4 | Comparati ve Example D1 | Comparative Example D2 | Comparative Example D3 | Comparative Example D4 |
|---|---|---|---|---|---|---|---|---|
| Base metal sheet | Base metal sheet (D) | | | | | Sn-10 (NilOFe) | | |
| Thickness of base metal layer [µm] | 150 | 250 | 290 | 298 | 150 | 250 | 290 | 299 |
| Coating sheet | Coating sheet (X) Sn100 | Coating sheet (X) Sn100 | Coating sheet (X) Sn100 | Coating sheet (X) Sn100 | - | - | - | - |
| Thickness of coating layer [µm] | 75 | 25 | 5 | 1 | - | - | - | - |
| Coating layer | Both surfaces | Both surfaces | Both surfaces | Both surfaces | Absent | Absent | Absent | Absent |
| Thickness ratio (base metal layer/ coating layer) | 2 | 10 | 58 | 298 | - | - | - | - |
| Void suppression ability | A | A | A | B | C | C | C | C |

**[Table 7]**

| | Example E1 | Example E2 | Example E3 | Example E4 | Comparative Example E1 | Comparative Example E2 |
|---|---|---|---|---|---|---|
| Base metal sheet | Base metal sheet (E) | | | | Sn-3 (Ni10Fe) | |
| Thickness of base metal layer [µm] | 150 | 250 | 290 | 298 | 150 | 250 |
| Coating sheet | Coating sheet (X) Sn100 | Coating sheet (X) Sn100 | Coating sheet (X) Sn100 | Coating sheet (X) Sn100 | - | - |
| Thickness of coating layer [µm] | 75 | 25 | 5 | 1 | - | - |
| Coating layer | Both surfaces | Both surfaces | Both surfaces | Both surfaces | Absent | Absent |
| Thickness ratio (base metal layer/ coating layer) | 2 | 10 | 58 | 298 | - | - |
| Void suppression ability | A | A | A | B | C | C |

**[Table 8]**

| | Example F1 | Example F2 | Example F3 | Example F4 | Comparative Example F1 | Comparative Example F2 | Comparative Example F3 | Comparative Example F4 |
|---|---|---|---|---|---|---|---|---|
| Base metal sheet | Base metal sheet (F) | | | | | Sn-5 (Ni10Fe)-35 (Ni-plated Cu) | | |
| Thickness of base metal layer [µm] | 150 | 250 | 290 | 298 | 150 | 250 | 290 | 298 |
| Coating sheet | Coating sheet (X) Sn100 | Coating sheet (X) Sn100 | Coating sheet (X) Sn100 | Coating sheet (X) Sn100 | - | - | - | - |
| Thickness of coating layer [µm] | 75 | 25 | 5 | 1 | - | - | - | - |
| Coating layer | Both surfaces | Both surfaces | Both surfaces | Both surfaces | Absent | Absent | Absent | Absent |
| Thickness ratio (base metal layer/ coating layer) | 2 | 10 | 58 | 298 | - | - | - | - |
| Void suppression ability | A | A | A | B | C | C | C | C |

**[Table 9]**

| | Example G1 | Example G2 | Example G3 | Example G4 | Comparative Example G1 | Comparative Example G2 | Comparative Example G3 | Comparative Example G4 |
|---|---|---|---|---|---|---|---|---|
| Base metal sheet | Base metal sheet (G) | | | | | Sn-5 (Ni10Fe)-35Ni | | |
| Thickness of base metal layer [µm] | 150 | 250 | 290 | 298 | 150 | 250 | 290 | 298 |
| Coating sheet | Coating sheet (X) Sn100 | Coating sheet (X) Sn100 | Coating sheet (X) Sn100 | Coating sheet (X) Sn100 | - | - | - | - |
| Thickness of coating layer [µm] | 75 | 25 | 5 | 1 | - | - | - | - |
| Coating layer | Both surfaces | Both surfaces | Both surfaces | Both surfaces | Absent | Absent | Absent | Absent |
| Thickness ratio (base metal layer/ coating layer) | 2 | 10 | 58 | 298 | - | - | - | - |
| Void suppression ability | A | A | A | B | C | C | C | C |

**[Table 10]**

| | Example A1 | Example A6 | Comparative Example A7 |
|---|---|---|---|
| Base metal sheet | Base metal sheet (A) Sn-40 (Ni10Fe) | | |
| Thickness of base metal layer [µm] | 150 | 298 | 100 |
| Coating sheet | Coating sheet (X) Sn100 | Coating sheet (X) Sn100 | Coating sheet (X) Sn100 |
| Thickness of coating layer [µm] | 75 | 1 | 100 |
| Coating layer | Both surfaces | Both surfaces | Both surfaces |
| Thickness ratio (base metal layer/ coating layer) | 2 | 298 | 1 |
| Shear strength [N] (heat resistance) | 22.8 | 25.1 | 10.3 |

From the results shown in Tables 1 to 9, it was confirmed that the generation of voids was suppressed in each example having a coating layer, compared to each comparative example not having a coating layer.

From the results shown in Tables 1 to 9, it was confirmed that examples in which the thickness ratio represented by base metal layer/coating layer was 2 to 58 had more excellent void suppression ability.

From the results shown in Table 10, it was confirmed that examples in which the thickness ratio represented by base metal layer/coating layer was 2 or more had more excellent heat resistance of the solder joint portion, compared to comparative examples in which the thickness ratio was 1.

## Claims

1. A joining material comprising:
a base metal layer; and
a coating layer that covers at least one surface of the base metal layer,
wherein the base metal layer contains a first metal containing Sn and a second metal composed of an alloy containing Ni and Fe,
the coating layer contains a metal having a lower melting point than the second metal, and
a ratio of a thickness of the base metal layer to a thickness of the coating layer is 2 or more as a ratio represented by base metal layer/coating layer.

2. The joining material according to Claim 1,
wherein the ratio of the thickness of the base metal layer to the thickness of the coating layer is 2 to 300 as the ratio represented by base metal layer/coating layer.

3. The joining material according to Claim 1 or 2,
wherein the thickness of the coating layer is 1 to 150 µm.

4. The joining material according to Claim 1 or 2,
wherein both surfaces of the base metal layer are each covered with the coating layer.

5. The joining material according to Claim 1 or 2,
wherein a content of the second metal in the base metal layer is 1 mass% or more and 70 mass% or less with respect to a total mass of the first metal and the second metal,
a content of the metal having a lower melting point than the second metal in the coating layer is 10 mass% or more and 100 mass% or less with respect to a total mass of the coating layer, and
a content of the second metal in the coating layer is less than 15 mass% with respect to the total mass of the coating layer.

6. The joining material according to Claim 1 or 2,
wherein the base metal layer further contains a third metal of which an entire surface is formed of a metal containing Ni.

7. The joining material according to Claim 6,
wherein a content of Ni in the metal containing Ni that forms the entire surface of the third metal is 50 mass% or more and 100 mass% or less with respect to a total mass of the metal forming the entire surface of the third metal, and
a content of the third metal is 1 mass% to 70 mass% with respect to a total mass of the first metal, the second metal, and the third metal.

8. A joining material comprising:
a base metal layer; and
a coating layer that covers at least one surface of the base metal layer,
wherein the base metal layer has a metal structure including a first phase that is a continuous phase and a second phase that is dispersed in the first phase,
the first phase is constituted by a metal containing Sn,
the second phase is constituted by an alloy containing Ni and Fe,
the coating layer has a metal structure including a metal phase constituted by a metal having a lower melting point than the alloy containing Ni and Fe, and
a ratio of a thickness of the base metal layer to a thickness of the coating layer is 2 or more as a ratio represented by base metal layer/coating layer.

9. The joining material according to Claim 8,
wherein the joining material is a clad material in which at least one surface of the base metal layer and the coating layer are pressure-bonded to each other.

10. A solder joint formed using the joining material according to any one of Claims 1, 2, 8, and 9.

11. A method for manufacturing a joining material including a base metal layer, and a coating layer that covers at least one surface of the base metal layer, the method comprising:
a step of pressure-bonding a coating sheet to at least one surface of a base metal sheet to cover the surface with the coating layer,
wherein the base metal sheet contains a first metal containing Sn and a second metal composed of an alloy containing Ni and Fe,
the coating sheet contains a metal having a lower melting point than the second metal, and
a ratio of a thickness of the base metal layer to a thickness of the coating layer is 2 or more as a ratio represented by base metal layer/coating layer.

12. The method for manufacturing a joining material according to Claim 11,
wherein the base metal layer further contains a third metal of which an entire surface is formed of a metal containing Ni.

13. A method for manufacturing a solder joint, comprising:
forming a joined portion between objects using the joining material manufactured by the method for manufacturing a joining material according to Claim 11 or 12.
